# EUROPEAN PATENT APPLICATION

(11) **EP 2 075 067 A1**
(43) Date of publication of application: **01.07.2009**
(21) Application number: 07807439.0
(22) Date of filing: 18.09.2007
(51) Int. Cl.: B01J 29/70, B01D 53/94, B01J 35/04

(54) **CATALYST FOR BURNING CARBON-CONTAINING SUBSTANCE, PROCESS FOR PRODUCTION OF THE CATALYST, MATERIAL HAVING CATALYST CARRIED THEREON, AND PROCESS FOR PRODUCTION OF THE MATERIAL**

(30) Priority: 19.09.2006 JP 2006252121; 10.09.2007 JP 2007234748
(71) Applicant: DENSO CORPORATION, Kariya-city, Aichi-pref. 448-8661 (JP); NIPPON SOKEN INC., Nishio-city Aichi 445-0012 (JP)
(72) Inventor: MIZUTANI, Keisuke, Aichi 445-0012 (JP); SUZAWA, Takumi, Aichi 445-0012 (JP); OHYAMA, Naohisa, Aichi 445-0012 (JP); YAMASHITA, Yukihiro, Aichi 448-8661 (JP)
(74) Representative: TBK-Patent
(86) International application number: PCT/JP2007/068038
(87) International publication number: WO 2008/035651

(57) **Abstract**

A carbon-based combustion catalyst is obtained by performing a burning step of burning sodalite at a temperature of 600 °C or more. Alternatively, a carbon-based combustion catalyst is obtained by performing the following mixing step, drying step, and burning step. In the mixing step, aluminosilicate (sodalite), and an alkali metal source, and/or an alkaline earth metal source are mixed in water to obtain a liquid mixture. In the drying step, the liquid mixture is heated to evaporate the water, thereby obtaining a solid. In the burning step, the solid is burned at a temperature of 600 °C or more. The thus-obtained catalyst can cause carbon-based material to be stably burned and removed at a low temperature for a long time.

## Description

### TECHNICAL FIELD

The present invention relates to a carbon-based material combustion catalyst which is used for burning and removing carbon-based material, such as carbon fines (e.g., particulate matter PM), contained in an exhaust gas, and to a manufacturing method thereof. Further, the invention also relates to a catalyst carrier for supporting the carbon-based material combustion catalyst on a ceramic substrate, and to a manufacturing method thereof.

### BACKGROUND ART

Carbon fines (e.g., particulate matter PM) contained in an exhaust gas of an internal combustion engine, such as a diesel engine, are burned and removed by a diesel particulate filter (DPF) or the like. In order to remove as much PM as possible at low cost, it is desireable to perform the burning and removing of the PM at a relatively low temperature. Thus, the DPF supporting the catalyst for promoting combustion of carbon-based material, such as PM, is used to burn and remove the PM in the exhaust gas.

As such a carbon-based material combustion catalyst, is generally used, for example, a noble metal, such as Pt, Pd, Rh, or an oxide thereof. The use of a catalyst made of an expensive noble metal, however, results in high cost, and disadvantageously leads to a problem of depletion of resources. Further, the combustion activity of the PM is insufficient, and thus under a normal operating condition, untreated PM may be gradually accumulated. In order to remove the accumulated PM, it is necessary to increase the temperature of exhaust gas using fuel, or to electrically heat the catalyst up to 600 °C or more. As a result, sulfur dioxide contained in the exhaust gas is transformed to sulfur trioxide or sulfuric acid mist, and thereby purification of the exhaust gas may not be performed completely even when the PM can be removed.

For the above described reason, catalysts having catalytic particles made of alkali metal oxides, such as potassium, and supported on oxide ceramic particles have been developed (see patent documents 1 to 4). By supporting of such alkali metal, the suspended particulate matter (PM) in the exhaust gas can be burned and removed at a low temperature about 400 °C.

In the catalyst made of alkali metal, however, the alkali metal, which is a catalytic component, may be eluted in the presence of water. When the catalyst is used in an environment including much vapor, for example, in the exhaust gas of the engine, purification of the exhaust gas may not be performed stably for a long time. When an excess amount of alkali metal is used taking into consideration the elution of the alkali metal in order to prevent reduction in catalytic activity, damage may be caused to a base made of ceramic or the like for supporting the alkali metal.
Patent Document 1: JP-A-2001-170483
Patent Document 2: JP-A-2005-230724
Patent Document 3: JP-A-2005-296871
Patent Document 4: JP-A-2005-342604

### DISCLOSURE OF THE INVENTION

### PROBLEMS TO BE SOLVED BY THE INVENTION

The present invention has been made in view of the forgoing problems encountered with the known art, and it is an object of the present invention to provide a carbon-based material combustion catalyst that can cause a carbon-based material to be stably burned and removed at low temperature for a long time, a method of manufacturing the combustion catalyst, a catalyst carrier, and a method of manufacturing the catalyst carrier.

### MEANS FOR SOLVING THE PROBLEMS

According to a first example of the invention, a method of manufacturing a carbon-based material combustion catalyst is provided. The combustion catalyst is adapted for burning carbon-based material contained in an exhaust gas from an internal combustion engine, while being supported on a ceramic substrate. The manufacturing method includes a step of mixing an aluminosilicate having an atomic equivalent ratio of Si/Al ≥ 1, and an alkali metal source and/or an alkaline earth metal source in water, a step of drying a liquid mixture by heating the mixture after the mixing step and evaporating water thereby to obtain a solid, and a step of burning the solid at a temperature of 600 °C or more thereby to obtain the carbon-based material combustion catalyst. The aluminosilicate is sodalite.

According to a second example of the invention, the carbon-based material combustion catalyst is obtained by the manufacturing method of the first example.

In the manufacturing method of the first example of the invention, the mixing step, the drying step, and the burning step are performed to manufacture the carbon-based material combustion catalyst.

That is, in the mixing step, the aluminosilicate (i.e., sodalite) having the atomic equivalent ratio of Si/Al ≥ 1, and the alkali metal source and/or alkaline earth metal source are mixed in water. Then, in the drying step, a liquid mixture after the mixing step is heated to evaporate water, thereby obtaining a solid. The solid consisting of a mixture of the alkali metal element and/or alkaline earth metal element, and the aluminosilicate. Thereafter, in the burning step, the solid is burned at a temperature of 600 °C or more. Thus, the carbon-based material combustion catalyst of the second example of the invention can be obtained.

The carbon-based material combustion catalyst contains the alkali metal element and/or the alkaline earth metal element. The alkali metal element and/or the alkaline earth metal element has and/or have a combustion promoting effect for carbon-based material such as suspended particulate matter (PM), in the exhaust gas. Thus, the carbon-based material combustion catalyst can cause the carbon-based material to be burned at low temperature.

Furthermore, the carbon-based material combustion catalyst can hold the alkali metal element and/or the alkaline earth metal element. Thus, the alkali metal element and/or the alkaline earth metal element can be prevented from being eluted in the presence of water.

In this way, the carbon-based material combustion catalyst is not easily eluted in the presence of water. In use of the catalyst supported on the substrate made of, for example, ceramics or the like, it is not necessary to support the catalyst on the substrate in an excessive amount so as to prevent degradation of the substrate. Thus, the carbon-based material combustion catalyst can stably promote combustion of the carbon-based material for a long time.

The carbon-based material combustion catalyst according to the second example of the invention, obtained by the manufacturing method of the first example of the invention, has the combustion promoting characteristics for carbon-based material, such as suspended particulate matter (PM), contained in the exhaust gas of the internal combustion engine, as mentioned above. The above-mentioned carbon-based material combustion catalyst can cause the carbon-based material to be burned at a temperature equal to or lower than that of a conventional noble metal catalyst.

The above-mentioned carbon-based material combustion catalyst hardly reduces the catalytic activity even in the presence of water, as mentioned above.

The carbon-based material combustion catalyst supported on the ceramic substrate in use hardly rots the ceramic substrate in the presence of water unlike the conventional alkali metal catalyst, and thus can prevent the degradation of the ceramic substrate.

Thus, the carbon-based material combustion catalyst can stably promote combustion of the carbon-based material even in the presence of water for a long time.

The reason why the carbon-based material combustion catalyst has excellent catalytic activity as mentioned above is not clear, but it is thought that Na of the aluminosilicate such as sodalite, the alkali metal element of the alkali metal source, and the alkaline earth metal element of the alkaline earth metal source, which are raw material, contribute to the catalytic activity.

That is, in the above-mentioned carbon-based material combustion catalyst, Na of the sodalite, and the alkali metal element of the alkali metal source and/or alkaline earth metal element of the alkaline earth metal source exhibit the combustion promoting characteristics of carbon-based material.

Furthermore, the carbon-based material combustion catalyst structure holds therein the alkali metal element and/or the alkaline earth metal element by a relatively strong connecting force, and makes it difficult for the alkali metal element and/or alkaline earth metal element to be eluted even in the presence of water. Thus, the combustion catalyst can prevent the reduction of the catalytic activity as mentioned above as well as the corrosion of the ceramic substrate.

In the first example of the invention, the carbon-based material combustion catalyst is obtained by the burning step which involves burning the solid mixture consisting of the aluminosilicate (e.g., sodalite) and the alkali metal source and/or alkaline earth metal source at a temperature of 600 °C or more. The carbon-based material combustion catalyst obtained in the above-mentioned burning step is used while being supported on the ceramic substrate. That is, the burning step is performed without supporting the mixture on the ceramic substrate, and the supporting of the catalyst on the ceramic substrate is performed after the burning step.

When the mixture of the sodalite and the alkali metal source and/or alkaline earth metal source is burned at a temperature of 600 °C or more after being supported on the ceramic substrate, Na contained in the sodalite, the alkali metal in the alkali metal source, and the alkaline earth metal in the alkaline earth metal source may be eluted. The alkali metal and/or alkaline earth metal eluted may partly change the structure of the ceramic substrate consisting of, for example, cordierite, which results in a decrease in thermal expansion coefficient and strength to cause cracks or the like in the ceramic substrate.

In the invention, as mentioned above, the carbon-based material combustion catalyst subjected to the burning step is used to be supported on the ceramic substrate. Such a combustion catalyst strongly holds the alkali metal element and/or alkaline earth metal element. Thus, when the combustion catalyst is supported to the ceramic substrate, heating in or after supporting can prevent the alkali metal and/or alkaline earth metal from being eluted from the combustion catalyst. As a result, the occurrence of cracks or the like can be prevented in the ceramic substrate.

In the first example of the invention, the mixing step, the drying step, and the burning step can easily manufacture the carbon-based material combustion catalyst. That is, the aluminosilicate (e.g., sodalite), and the alkali metal source and/or the alkaline earth metal source are mixed in water and dried to obtain a mixture (solid), which is then burned at a temperature of 600 °C or more. Thus, the carbon-based material combustion catalyst can be easily obtained.

According to the first and second examples of the invention, the carbon-based material combustion catalyst and the manufacturing method thereof can be provided so as to stably burn and remove carbon-based material at a low temperature for a long time.

In a third example of the invention, there is provided a manufacturing method of a catalyst carrier which is adapted to support the carbon-based material combustion catalyst on the ceramic substrate. The combustion catalyst is used for burning carbon-based material contained in the exhaust gas of the internal combustion engine. The manufacturing method includes a supporting step of supporting the carbon-based combustion catalyst obtained by the manufacturing method of the first example of the invention on the ceramic substrate, thereby obtaining the catalyst carrier.

In a fourth example of the invention, the catalyst carrier is obtained by the manufacturing method according to the third example of the invention.

The catalyst carrier according to the fourth example of the invention, obtained by the manufacturing method of the third example of the invention, supports the carbon-based material combustion catalyst obtained by the manufacturing method of the first example of the invention on the ceramic substrate.

Thus, the catalyst carrier can exhibit the excellent action and effect of the carbon-based material combustion catalyst as mentioned above. That is, the catalyst carrier can cause the carbon-based material to be stably burned and removed at a low temperature for a long time.

The above-mentioned carbon-based material combustion catalyst can prevent the elution of the alkali metal and/or alkaline earth metal that may rot the ceramic substrate in the presence of water. Thus, the catalyst carrier can stably burn the carbon-based material for a long time without almost rotting the ceramic substrate even in the presence of water.

In the third example of the invention, the manufacturing method of the catalyst carrier uses the carbon-based material combustion catalyst obtained by the burning step of the first example of the invention. In the burning step, the mixture (solid) of the aluminosilicate (e.g., sodalite) and the alkali metal source and/or alkaline earth metal source are burned at a temperature of 600 °C or more. The manufacturing method of the catalyst carrier includes the step of supporting the carbon-based material combustion catalyst on the ceramic substrate thereby to obtain the catalyst carrier. As mentioned above, the combustion catalyst obtained through the above-mentioned burning step strongly holds the alkali metal element and/or alkaline earth metal element. Thus, in the supporting step, the alkali metal and/or alkaline earth metal can be prevented from being eluted from the carbon-based material combustion catalyst. As a result, it can prevent the occurrence of cracks or the like in the ceramic substrate due to the eluted alkali metal and/or alkaline earth metal. Even heating of the catalyst carrier obtained after supporting the catalyst makes it difficult for the alkali metal element and/or alkaline earth metal element to be eluted from the carbon-based material combustion catalyst. Thus, the catalyst carrier can be used stably for a long time.

In this way, according to the third and fourth examples of the invention, the catalyst carrier and the manufacturing method thereof can be provided so as to stably burn and remove the carbon-based material at a low temperature for a long time.

In a fifth example of the invention, a manufacturing method of a carbon-based material combustion catalyst used for burning carbon-based material contained in the exhaust gas of the internal combustion engine, while being supported on the ceramic substrate includes a burning step for burning the sodalite at a temperature of 600 °C or more to obtain the carbon-based material combustion catalyst.

In a sixth example of the invention, the carbon-based material combustion catalyst is obtained by the manufacturing method according to the fifth example of the invention.

The carbon-based material combustion catalyst according to the sixth example of the invention, obtained by the manufacturing method of the fifth example of the invention, has a combustion promoting effect for carbon-based material, such as suspended particulate matter (PM), contained in the exhaust gas from the internal combustion engine. Thus, the carbon-based material combustion catalyst can cause the carbon-based material to be burned at a temperature that is equal to or lower than that of a conventional noble metal catalyst.

The above-mentioned carbon-based material combustion catalyst hardly reduces the catalytic activity even in the presence of water, as mentioned above.

The carbon-based material combustion catalyst supported on the ceramic substrate in use hardly rots the ceramic substrate in the presence of water unlike the conventional alkali metal catalyst, and thus can prevent the degradation of the ceramic substrate.

Thus, the carbon-based material combustion catalyst can stably promote combustion of the carbon-based material even in the presence of water for a long time.

The reason why the carbon-based material combustion catalyst has excellent catalytic activity as mentioned above is not clear, but it is thought that Na of the sodalite, which is a raw material, contributes to the catalytic activity.

That is, it is thought that in the above-mentioned carbon-based material combustion catalyst obtained by burning the sodalite at a temperature of 600 °C or more, the Na element contained in the sodalite exhibits the combustion promoting characteristics of the carbon-based material.

Furthermore, it is thought that the carbon-based material combustion catalyst structure holds therein the Na element by a relatively strong connecting force, and thus makes it difficult for the Na to be eluted even in the presence of water. Thus, the combustion catalyst can prevent the reduction of the catalytic activity as mentioned above as well as the corrosion of the ceramic substrate.

In the fifth example of the invention, the carbon-based material combustion catalyst is obtained by the burning step which involves burning the sodalite at a temperature of 600 °C or more. The carbon-based material combustion catalyst obtained through the above-mentioned burning step is used while being supported on the ceramic substrate. That is, the burning step is performed without supporting the sodalite on the ceramic substrate, and the supporting of the catalyst on the ceramic substrate is performed after the burning step.

When the sodalite is burned at a temperature of 600 °C or more after being supported on the ceramic substrate, Na contained in the sodalite may be eluted, and the eluted Na may partly change the structure of the ceramic substrate consisting of, for example, cordierite, which may result in a decrease in thermal expansion coefficient and strength to cause cracks or the like in the ceramic substrate.

In the invention, as mentioned above, the carbon-based material combustion catalyst subjected to the burning step is used to be supported on the ceramic substrate. Such a combustion catalyst strongly holds the alkali metal element (Na) contained in the sodalite. Thus, when the combustion catalyst is supported on the ceramic substrate, heating in or after supporting of the catalyst can prevent the alkali metal from being eluted from the combustion catalyst. As a result, the occurrence of cracks or the like can be prevented in the ceramic substrate.

In the fifth example of the invention, the burning step can easily manufacture the carbon-based material combustion catalyst. That is, the sodalite is burned at a temperature of 600 °C or more, which can easily obtain the carbon-based material combustion catalyst.

According to the fifth and sixth examples of the invention, the carbon-based material combustion catalyst and the manufacturing method thereof can be provided so as to stably burn and remove carbon-based material at a low temperature for a long time.

In a seventh example of the invention, there is provided a manufacturing method of a catalyst carrier which is adapted to support the carbon-based material combustion catalyst on the ceramic substrate. The combustion catalyst is used for burning carbon-based material contained in the exhaust gas of the internal combustion engine. The manufacturing method includes a supporting step of supporting the carbon-based combustion catalyst obtained by the manufacturing method of the fifth example of the invention on the ceramic substrate, thereby obtaining the catalyst carrier.

In an eighth example of the invention, the catalyst carrier is obtained by the manufacturing method according to the seventh example of the invention.

The catalyst carrier according to the eighth example of the invention, obtained by the manufacturing method of the seventh example of the invention, supports the carbon-based material combustion catalyst obtained by the manufacturing method of the fifth example of the invention on the ceramic substrate. Thus, the catalyst carrier can exhibit the excellent action and effect of the carbon-based material combustion catalyst as mentioned above. That is, the catalyst carrier can cause the carbon-based material to be stably burned and removed at a low temperature for a long time.

The above-mentioned carbon-based material combustion catalyst can prevent the elution of the alkali metal and/or alkaline earth metal that may rot the ceramic substrate in the presence of water. Thus, the catalyst carrier can cause the carbon-based material for a long time without almost rotting the ceramic substrate even in the presence of water.

In the seventh example of the invention, the manufacturing method of the catalyst carrier uses the carbon-based material combustion catalyst obtained by the burning step in the fifth example of the invention which involves burning the sodalite at a temperature of 600 °C or more. The manufacturing method of the catalyst carrier includes the step of supporting the carbon-based material combustion catalyst on the ceramic substrate thereby to obtain the catalyst carrier. As mentioned above, the combustion catalyst obtained through the above-mentioned burning step strongly holds the alkali metal element (Na) contained in the sodalite. Thus, in the supporting step, the alkali metal can be prevented from being eluted from the carbon-based material combustion catalyst. As a result, the occurrence of cracks or the like in the ceramic substrate due to the eluted alkali metal can be prevented.

According to the seventh and eighth examples of the invention, the catalyst carrier and the manufacturing method thereof can be provided so as to stably burn and remove the carbon-based material at a low temperature for a long time.

### BEST MODE FOR CARRYING OUT THE INVENTION

Now, preferred embodiments of the invention will be described.

First, a first embodiment of the invention will be described below.

The above-mentioned carbon-based material combustion catalyst is used for burning and removing carbon-based material or the like. The carbon-based material described above includes, for example, carbon fines (particulate matter, PM) or the like contained in an exhaust gas of a diesel engine.

The above-mentioned manufacturing method according to the first embodiment of the invention includes the mixing step, the drying step, and the burning step as described above.

In the mixing step according to the first embodiment of the invention, an aluminosilicate having an atomic equivalent ratio of Si/Al; ≥ 1, and an alkali metal source and/or an alkaline earth metal source are mixed into water. At this time, the aluminosilicate and alkali metal source and/or alkaline earth metal source are preferably mixed so as to be dispersed uniformly.

In a case where the atomic equivalent ratio of Si/Al < 1, the carbon-based material combustion catalyst obtained may allow the alkali metal element and/or alkaline earth metal element to be easily eluted in the presence of water. As a result, the above-mentioned carbon-based material combustion catalyst may have a difficulty in stably maintaining catalytic activity for a long time.

Specifically, in the first embodiment of the invention, sodalite is used as the above-mentioned aluminosilicate. The sodalite is represented by a general formula 3(Na₂O.Al₂O₃.2SiO₂).2NaX, in which X is an atom or atomic group of a monohydric anion, for example, OH, or halogen such as F, Cl, Br, I, or the like.

In the mixing step, the aluminosilicate (sodalite) and the alkali metal source and/or alkaline earth metal source are mixed in water to obtain a liquid mixture.

The alkali metal source includes, for example, a compound of alkali metal or the like. The alkaline earth metal source includes, for example, a compound of alkaline earth metal or the like.

The alkali metal element source contains one or more kinds of elements selected from the group consisting of Na, K, Rb, and Cs. The alkaline earth metal element preferably contains one or more kinds of elements selected from the group consisting of Ca, Sr, and Ba. As a result, the carbon-based material combustion catalyst can cause the carbon-based material to be burned at lower temperatures.

That is, in the mixing step, at least the aluminosilicate (sodalite) and the alkali metal source and/or alkaline earth metal source except for a Mg source are preferably mixed. The Mg source can be used together with another alkali metal source and/or another alkaline earth metal source without singly using a mixture of the Mg source with the sodalite.

The alkali metal source and/or the alkaline earth metal source is preferably, for example, a carbonate, a sulfate, a phosphate, a nitrate, an organic acid salt, a halide, an oxide, or a hydroxide.

In this case, the alkali metal source and/or the alkaline earth metal source can be easily mixed in a polar solvent, such as water. Thus, the alkali metal source and/or the alkaline earth metal source can be mixed uniformly in the mixing step.

More preferably, an alkali metal salt may be used as the alkali metal source, and an alkaline earth metal salt may be used as the alkaline earth metal source. In this case, the above-mentioned alkali metal source and alkaline earth metal source have high solubility to a polar solvent, such as water, and thus can be solved in the polar solvent. When the mixing step is performed in the polar solvent such as water, the aluminosilicate and the alkali metal source and/or the alkaline earth metal source can be mixed uniformly and easily.

In the mixing step, a polar solvent other than water is used instead of water. The aluminosilicate and the alkali metal source and/or alkaline earth metal source are mixed in the polar solvent, and in the drying step, the polar solvent can be evaporated to obtain the solid. Specifically, the polar solvent for use can be alcohol, such as methanol, ethanol, or the like.

A solvent that is more volatile than water is preferably used as the polar solvent.

In the drying step, the polar solvent can be evaporated more easily.

In the mixing step, the alkali metal source and/or the alkaline earth metal source and the aluminosilicate may be preferably mixed such that the total amount of the alkali metal element and the alkaline earth metal element contained in the alkali metal source and/or the alkaline earth metal element is equal to or less than 2.25 mol with respect to 1 mol of Si element of the aluminosilicate.

When the total amount of the alkali metal element and the alkaline earth metal element exceeds 2.25 mol with respect to 1 mol of Si element of the aluminosilicate (sodalite), the solid may be easily melted in the burning step. Thus, the carbon-based material combustion catalyst obtained after the burning step has once been brought into a melted state, which may result in an increased hardness of the catalyst. As a result, it is difficult to adjust the size of the carbon-based material combustion catalyst to a desired grain size by performing a pulverizing step after the burning step to be described later. In this case, even when the carbon-based material combustion catalyst obtained has the excellent catalytic activity, the catalyst may be easily affected by water. That is, the amount of reduction in catalytic activity may become large due to water. As a result, it is difficult to maintain the predetermined catalytic activity for a long time.

More preferably, in the mixing step, the alkali metal source and/or the alkaline earth metal source and the aluminosilicate may be mixed such that the total amount of the alkali metal element and the alkaline earth metal element contained in the alkali metal source and/or the alkaline earth metal element is equal to or less than 1 mol with respect to 1 mol of Si element of the aluminosilicate.

Further more preferably, in the mixing step, the alkali metal source and/or the alkaline earth metal source and the aluminosilicate may be mixed such that the total amount of the alkali metal element and the alkaline earth metal element contained in the alkali metal source and/or the alkaline earth metal source is equal to or less than 0.5 mol with respect to 1 mol of Si element of the aluminosilicate.

The above-mentioned total amount of the alkali metal element and alkaline earth metal element is the total amount of alkali metal element in the alkali metal source and of alkaline earth metal element in the alkaline earth metal source contained in the aluminosilicate (sodalite). In use of any one of the alkali metal source and the alkaline earth metal source, the amount of the other source can be calculated to be 0 mol. In use of a plurality of alkali metal sources and a plurality of alkaline earth metal sources, the total amount of these sources can be calculated as the above-mentioned total amount.

Then, in the drying step, the liquid mixture obtained after the mixing step is heated to evaporate the water, thereby obtaining a solid. In the first embodiment of the invention, the solid consists of a mixture of the alkali metal element source and/or alkaline earth metal source, and the aluminosilicate (sodalite).

Then, in the burning step, the solid is burned at a temperature of 600 °C or higher. Thus, the above-mentioned carbon-based material combustion catalyst can be obtained.

When the burning temperature (i.e., maximum temperature at heating) below 600 °C in the burning step, the alkali metal element and/or alkaline earth metal element each tends to be easily eluted in the presence of water. Thus, the above-mentioned carbon-based material combustion catalyst may have a difficulty in stably exhibiting the catalytic activity for the carbon-based material for a long time. In the burning step, burning is preferably performed at a burning temperature of 700 °C or more, and more preferably, 800 °C or more.

When the burning temperature exceeds 1200 °C, the carbon-based material combustion catalyst has once been brought into a melted state in the burning step, and thus may become a massive form having a high hardness. As a result, it may be difficult to adjust the size of the carbon-based material combustion catalyst to a desired grain size by performing a pulverizing step after the burning step to be described later.

Accordingly, in the burning step, the solid may be preferably burned at a temperature from 700 °C to 1200 °C.

The term "burning temperature in the burning step" as used herein means the temperature of the solid itself, and not an ambient temperature. Thus, in the burning step, the burning is performed such that the temperature of the solid itself becomes 600 °C or more. In the burning step, the burning at the burning temperature preferably continues for one hour or more, preferably for five hours or more, and more preferably for ten hours or more.

Then, the pulverizing step for pulverizing the carbon-based material combustion catalyst is performed after the burning step. In this case, the powdered carbon-based material combustion catalyst can be obtained. Such a powdered carbon-based material combustion catalyst is easily supported, for example, on a ceramic substrate having a honeycomb structure or the like. Since the superficial area of the catalyst becomes large, the combustion catalyst can have more excellent catalytic activity.

In the pulverizing step, the carbon-based material combustion catalyst having a desired grain size can be obtained by adjusting a pulverizing condition.

Preferably, in the pulverizing step, the carbon-based material combustion catalyst may have a median diameter adjusted to be equal to or less than 50 µm. In a case where the median diameter exceeds 50 µm, when the ceramic substrate is coated with the carbon-based material combustion catalyst, the ceramic substrate may become clogged, or the amount of supported catalyst may be varied easily. The median diameter of the catalyst may be more preferably equal to or less than 10 µm.

The median diameter of the carbon-based material combustion catalyst can be measured, for example, by a laser diffraction/diffusion grain size distribution measuring device or a scanning electron microscope.

The above-mentioned carbon-based material combustion catalyst is used while being supported on the ceramic substrate.

The above carbon-based material combustion catalyst is obtained by the burning step which involves burning a mixture (solid) of the aluminosilicate (sodalite) and the alkali metal source and/or alkaline earth metal source at a temperature of 600 °C or more. The thus-obtained combustion catalyst structure holds therein the alkali metal element and/or the alkaline earth metal element by a relatively strong connecting force. Thus, the carbon-based material combustion catalyst can make it difficult for the alkali metal and/or alkaline earth metal to be eluted when the catalyst is supported on the ceramic substrate. Further, the combustion catalyst can prevent the ceramic substrate from being degraded due to the alkali metal and the alkaline earth metal eluted.

In contrast, when the mixture not burned is supported on the ceramic substrate, Na of the sodalite, the alkali metal element of the alkali metal source, and the alkaline earth metal element of the alkaline earth metal source may degrade the ceramic substrate.

That is, in the first embodiment of the invention, the burning step is performed before supporting of the catalyst on the ceramic substrate without supporting the mixture on the ceramic substrate.

The carbon-based material combustion catalyst in a second embodiment of the invention, obtained by the manufacturing method of the first embodiment of the invention, is used for burning and removing carbon-based material of the carbon fines (PM) or the like contained in the exhaust gas of the internal combustion engine, such as a gasoline engine or a diesel engine.

Next, the fifth embodiment of the invention will be described below.

In the burning step of the fifth embodiment of the invention, the sodalite is burned at a temperature of 600 °C or more.

The sodalite is represented by a general formula 3(Na₂O.Al₂O₃.2SiO₂).2NaX, in which X is an atom or atomic group of a monohydric anion, for example, OH, or halogen, such as F, Cl, Br, I, or the like.

When the burning temperature is below 600 °C in the burning step, it is difficult to obtain the carbon-based material combustion catalyst having a desired effect. That is, in this case, the catalytic activity of the carbon-based material combustion catalyst obtained for combustion of carbon-based material may be reduced. Preferably, the burning temperature may be equal to or more than 700 °C.

When the burning temperature is 1200 °C or more, the sodalite may be easily eluted in the burning step. Thus, the carbon-based material combustion catalyst obtained after the burning step has once been brought into a melted state, and thereby it may result in an increased hardness of the catalyst. As a result, it may be difficult to adjust the size of the carbon-based material combustion catalyst to a desired grain size by performing the pulverizing step after the burning step to be described later.

Thus, the sodalite may be burned preferably at a temperature of 700 to 1200 °C in the burning step.

The burning temperature in the burning step is a temperature of the sodalite itself, and not an ambient temperature. Thus, in the burning step, the burning is performed such that the temperature of the solid itself becomes 600 °C or more. In the burning step, the burning at the burning temperature preferably continues for one hour or more, preferably for five hours or more, and more preferably for ten hours or more.

The manufacturing method of the combustion catalyst preferably includes the pulverizing step of pulverizing the carbon-based material combustion catalyst obtained after the burning step.

The powdered carbon-based material combustion catalyst can be obtained. Such a carbon-based material combustion catalyst can be easily supported, for example, on a ceramic substrate having a honeycomb structure or the like. Since the superficial area of the carbon-based material combustion catalyst becomes large, the combustion catalyst can have more excellent catalytic activity.

In the pulverizing step, the pulverizing conditions can be appropriately adjusted to obtain the carbon-based material combustion catalyst having a desired grain size. Specifically, like the first embodiment of the invention, the carbon-based material combustion catalyst may have a median diameter adjusted to be preferably equal to or less than 50 µm, and more preferably to 10 µm or less.

The above-mentioned carbon-based material combustion catalyst is used while being supported on the ceramic substrate.

The combustion catalyst obtained by the burning step strongly holds the alkali metal element (Na) by a relatively strong connecting force, and thus makes it difficult for the alkali metal element to be eluted when being supported on the ceramic substrate, thereby preventing the degradation of the ceramic substrate due to the alkali metal element eluted.

In contrast, when the sodalite not burned is supported on the ceramic substrate, the alkali metal element (Na) of the sodalite is eluted during heating in or after supporting of the sodalite on the substrate, and thereby the eluted sodalite may degrade the ceramic substrate.

In other words, in the fifth embodiment of the invention, the burning step is performed before supporting of the sodalite on the ceramic substrate, that is, without supporting the sodalite on the ceramic substrate.

The carbon-based material combustion catalyst in a sixth embodiment of the invention, obtained by the manufacturing method of the fifth embodiment of the invention, is used for burning and removing carbon-based material of the carbon fines (PM) or the like contained in the exhaust gas of the internal combustion engine, such as a gasoline engine or a diesel engine.

Next, the manufacturing methods of the catalyst carrier according to the third and seventh preferred embodiments of the invention, and the catalyst carriers according to the fourth and eighth preferred embodiments of the invention will be described with reference to the accompanying drawings.

The manufacturing method of the third embodiment of the invention has the same form as that of the seventh embodiment of the invention except for the carbon-based material combustion catalyst. Also, the catalyst carrier of the fourth embodiment of the invention has the same form as that of the eight embodiment of the invention except for the combustion catalyst.

That is, the manufacturing method of the third embodiment of the invention uses the carbon-based material combustion catalyst obtained by the manufacturing method of the first embodiment of the invention. The method includes a supporting step of supporting the carbon-based material combustion catalyst on the ceramic substrate thereby to obtain the catalyst carrier according to the fourth embodiment of the invention. The manufacturing method of the seventh embodiment of the invention uses the carbon-based material combustion catalyst obtained by the manufacturing method of the fifth embodiment of the invention. The method includes a supporting step of supporting the combustion catalyst on the ceramic substrate so as to obtain the catalyst carrier according to the eighth embodiment of the invention.

In the supporting step, preferably, at least the carbon-based material combustion catalyst and sol or slurry oxide ceramic particles are mixed to form a composite material, and the ceramic substrate is preferably coated with the composite material to be heated.

Specifically, first, the carbon-based material combustion catalyst and, for example, the sol oxide ceramic particles are mixed to form the composite material. A solvent, such as water, is further added to the composite material, if necessary, thereby to adjust the viscosity of the composite material to an appropriate value. The ceramic substrate is coated with the thus-obtained slurry composite material to be heated.

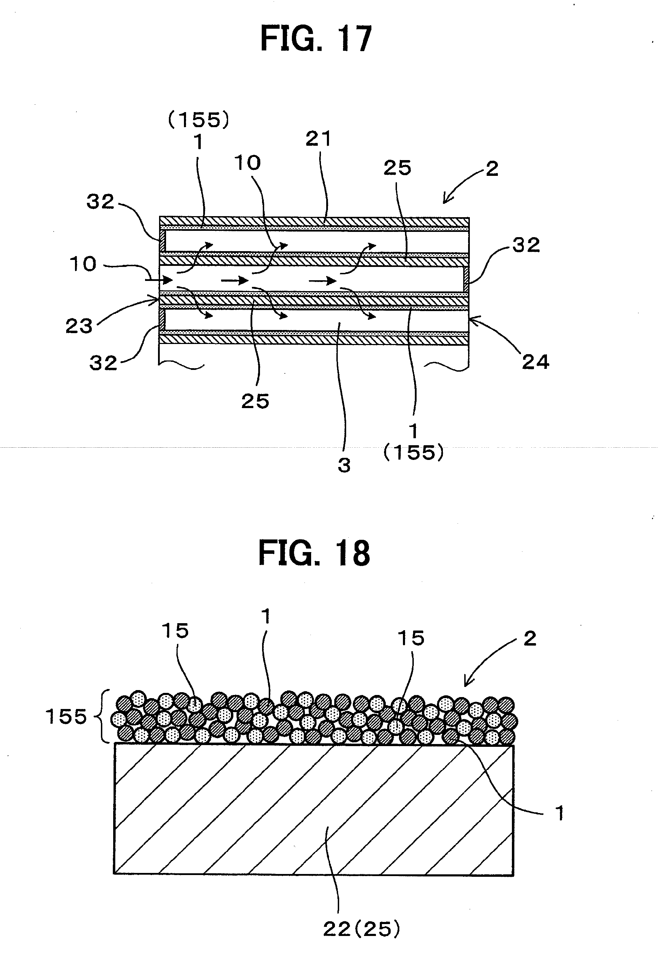

In this case, as shown in Fig. 18, the above-mentioned carbon-based material combustion catalyst 1 and oxide ceramic particles 15 are burned onto a ceramic substrate 22, so that it is possible to easily provide a catalyst carrier 2 supporting the combustion catalyst 1 on the ceramic substrate 22. A bonding layer 155 including the oxide ceramic particles 15 connected together is formed on the ceramic substrate 22. Thus, the catalyst carrier 2 holding the combustion catalyst 1 or catalyst particles dispersed into the bonding layer 155 can be obtained.

The catalyst carrier 2 with such a structure strongly holds the carbon-based material combustion catalyst 1 by the bonding layer 155. Thus, it is difficult for the combustion catalyst 1 or catalyst particles to drop off in use, thereby stably maintaining the catalytic activity.

Preferably, the above-mentioned oxide ceramic particles mainly include one or more elements selected from the group consisting of alumina, silica, titania, and zirconia.

In this case, because the bonding layer having a large specific surface is easily formed, a superficial area of the catalyst carrier can be increased. As a result, the carbon-based material combustion catalyst tends to be in contact with carbon-based material, so that the catalyst carrier can cause the carbon-based material to be burned more effectively.

The ceramic substrate for use can be a substrate mainly consisting of, for example, cordierite, alumina, aluminum titanate, SiC, or titania.

The ceramic substrate for use can be a substrate having, for example, a pellet-like shape, a filter-like shape, a foam-like shape, a blow-through type monolith shape, or the like.

Preferably, the ceramic substrate may consist of cordierite, SiC, or aluminum titanate. More preferably, the ceramic substrate may have the honeycomb structure. In such a case, the catalyst carrier can be one that is more appropriate for purification of exhaust gas.

The honeycomb structure includes an outer peripheral wall, partition walls provided in the form of honeycomb inside the outer peripheral wall, and a plurality of cells partitioned by the partition walls and penetrating both ends of the structure. The honeycomb structure for use can be a structure in which all cells are opened to both ends. Alternatively, the honeycomb structure for use can be another structure in which some parts of cells are opened to both ends of the honeycomb structure and the remaining cells are closed by stoppers formed on the both ends.

The catalyst carrier can support not only the above-mentioned carbon-based material combustion catalyst, but also one or more kinds of rare-earth elements on the ceramic substrate. The rare-earth elements for use can be, for example, Ce, La, Nd, and the like. Oxide particles of the rare-earth elements can be used as the above-mentioned rare-earth element.

In this case, a change in state of the rare-earth element causes absorption and desorption of oxygen, thereby further promoting the combustion of the carbon-based material.

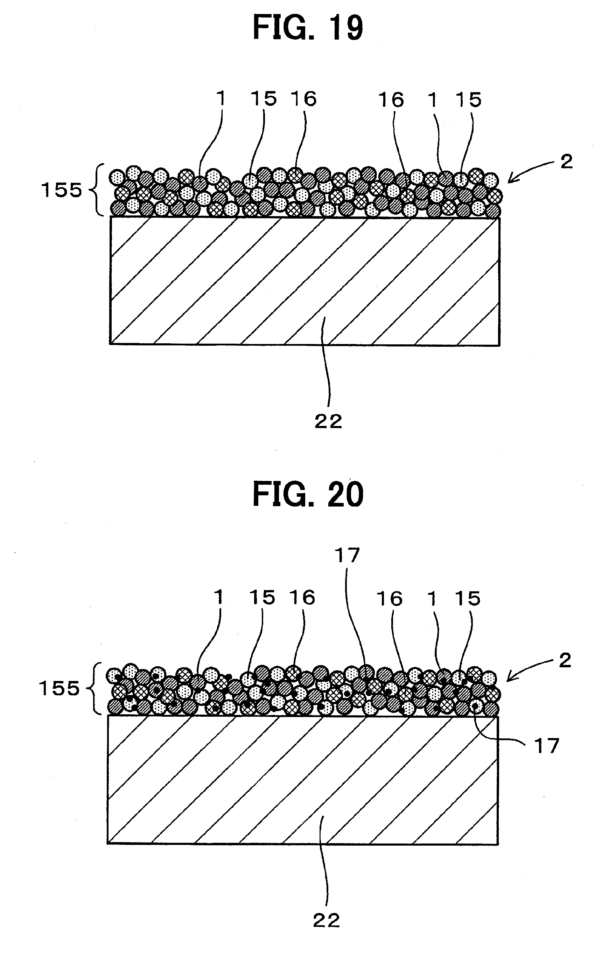

Fig. 19 shows an example of the catalyst carrier 2 for supporting the rare-earth element 16 together with the carbon-based material combustion catalyst 1 on the substrate 22. Such a catalyst carrier 2 can be obtained by mixing the carbon-based material combustion catalyst 1, the rare-earth element 16, and for example, the sol oxide ceramic particles 15 or the like, further adding water to the mixture if necessary to adjust the mixture to the appropriate viscosity, and burning the thus-obtained slurry composite material onto the ceramic substrate 22. In this case, the catalyst carrier 2, which includes the bonding layer 155 containing the oxide ceramic particles 15 connected together and formed on the ceramic substrate 22, is provided. The carbon-based material combustion catalyst 1 and the rare-earth element 16 dispersed into the bonding layer 155 are supported on the catalyst carrier 2.

The catalyst carrier can support noble metal if necessary, in addition to the carbon-based combustion catalyst. In this case, the catalytic activity of the catalyst carrier for combustion of carbon-based material can be further improved. Also, because the carbon-based material combustion catalyst has excellent catalytic activity, the amount of supported noble metal which is relatively expensive can be decreased largely as compared to a conventional case. The noble metal includes, for example, Pt, Pd, Rh, and the like.

Fig. 20 shows an example of the catalyst carrier 2 in which the carbon-based material combustion catalyst 1, the rare-earth element 16, and the noble metal 17 are dispersed into the bonding layer 155 containing the oxide ceramic particles 15 connected together. Such a catalyst carrier 2 can be obtained by mixing the carbon-based material combustion catalyst 1, the rare-earth element 16, for example, the sol oxide ceramic particles 15 or the like, and a noble metal complex, further adding water to the mixture if necessary to adjust the mixture to the appropriate viscosity, and burning the thus-obtained slurry composite material onto the ceramic substrate 22.

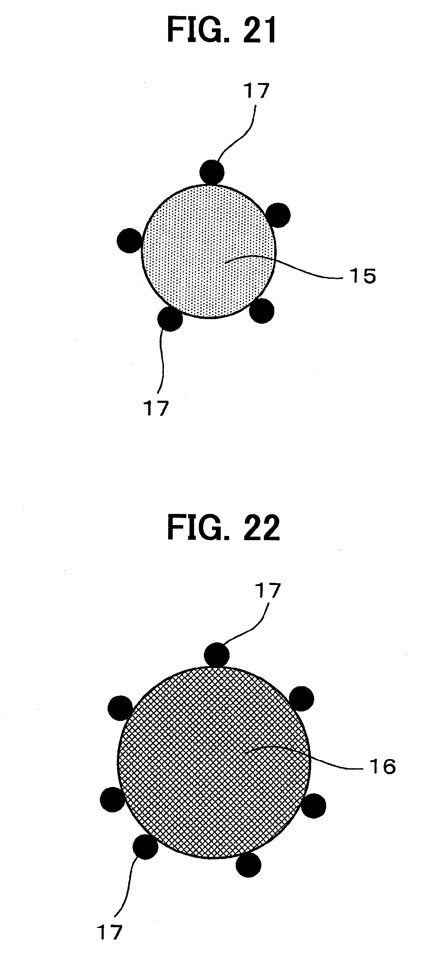

As shown in Fig. 21, the noble metal 17 is preferably supported on the oxide ceramic particles 15. When the rare-earth element contains oxide particles of a rare-earth element, as shown in Fig. 22, the noble metal 17 is preferably supported on the oxide particle 16 of the rare-earth element.

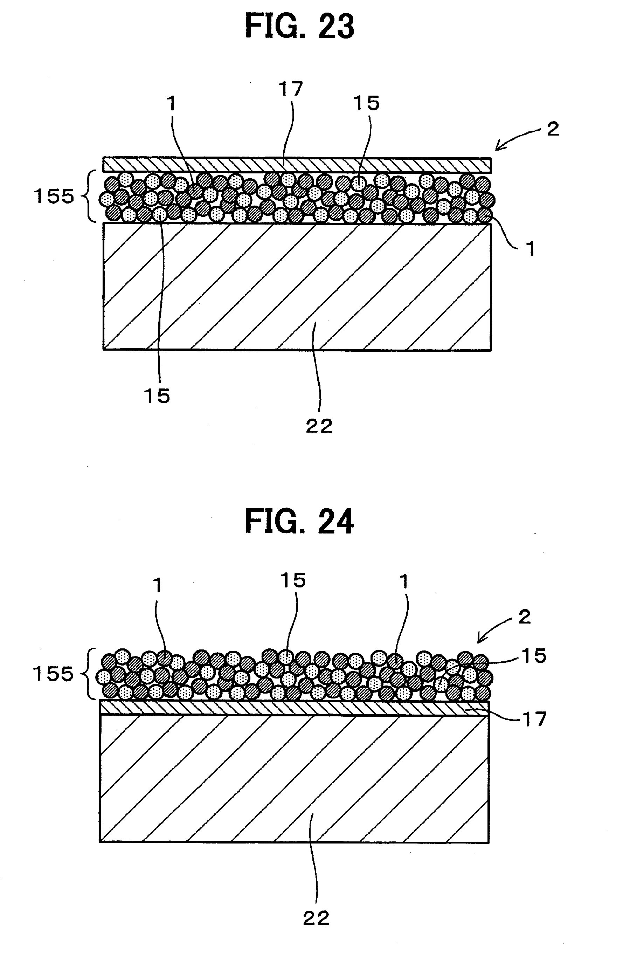

The above-mentioned catalyst carrier can form the noble metal layer 17 made of noble metal as shown in Figs. 23 and 24.

As shown in Fig. 23, the noble metal layer 17 can be formed on the bonding layer 155 containing the carbon-based combustion catalyst 1 supported on the ceramic substrate 22. That is, the bonding layer 155 containing the carbon-based combustion catalyst 1 is formed on the ceramic substrate 22, and the noble metal layer 17 can be formed on the bonding layer 155.

In this case, poisoning of the alkali metal and/or alkaline earth metal of the carbon-based material combustion catalyst 1 can be prevented at the catalyst carrier.

As shown in Fig. 24, the noble metal layer 17 can be formed between the ceramic substrate 22 and the bonding layer 155 containing the carbon-based material combustion catalyst 1. That is, the noble metal layer 17 can be formed on the ceramic substrate 22, and the bonding layer 155 containing the carbon-based combustion catalyst 1 can be formed on the noble metal layer 17.

In this case, the alkali metal and/or alkaline earth metal of the carbon-based material combustion catalyst 1 can be prevented from moving to the ceramic substrate 22 made of ceramics, so as to further prevent the corrosion of the ceramic substrate 22.

### EXAMPLES

### (Example 1)

Next, the invention will be described below based on the following examples.

In the present example, a carbon-based material combustion catalyst used for burning and removing carbon-based material contained in the exhaust gas from the internal combustion engine is manufactured to examine the combustion promoting characteristics for the carbon-based material (e.g., carbon).

In the present example, the carbon-based material combustion catalyst is manufactured by performing a burning step which involves burning sodalite at a temperature of 600 °C or more.

Specifically, first, sodalite (3(Na₂O.Al₂O₃.2SiO₂).2NaX) powder was prepared.

Then, the sodalite was burned at a temperature of 1000 °C. Specifically, the sodalite was heated at a temperature increasing rate of 100 °C/hr. After the temperature of the sodalite reached the burning temperature of 1000 °C, the sodalite was maintained for 10 hours thereby to perform the burning step. Thereafter, the thus-obtained burned material was pulverized so as to have a median diameter of 10 µm or less and a maximum grain size of 100 µm or less, thereby obtaining the powdered carbon-based material combustion catalyst. The powdered carbon-based material combustion catalyst was referred to as a "specimen E1 ".

Next, the combustion promoting characteristics for the carbon-based material of the carbon-based material combustion catalyst (specimen E1) manufactured in the present example were examined. As a comparative example, combustion promoting characteristics of a noble metal-based catalyst (Pt powder), and potassium carbonate powder were examined.

Specifically, first, 200 mg of catalyst species (e.g., the specimen E1, the noble metal-based catalyst or the potassium carbonate powder) and 20 mg of carbon black (CB) were respectively measured accurately by an electronic balance. These catalyst species were combined for a certain time using an agate mortar such that the ratio of the catalyst species (weight) to CB (weight) was 10 : 1, and thereby three kinds of evaluation samples containing the catalyst species and carbon black were obtained. An evaluation sample of the single CB was manufactured without using the catalyst species as a comparative sample. The evaluation sample of the single CB was one after being mixed for the certain time using the agate mortar, like the other samples. In other words, the evaluation samples manufactured were four kinds of samples, namely, a single CB sample, a mixture of a noble metal-based catalyst and CB, a mixture of the specimen E1 and CB, and a mixture of potassium carbonate and CB.

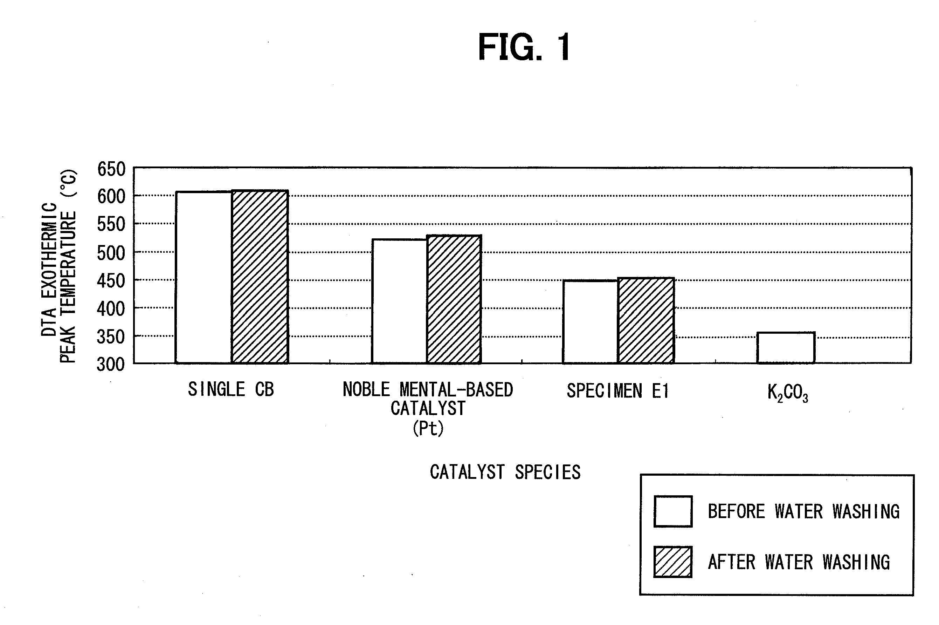

Then, 6mg of each evaluation sample was heated up to the maximum temperature of 900 °C at the temperature increasing rate of 10 °C/min thereby to burn the CB. At this time, a DTA exothermic peak temperature of each evaluation sample was measured using a thermal analysis - differential thermogravimetric (TG-DTA) simultaneous measurement device ("TG8120" manufactured by Rigaku Industrial Co. Ltd). The DTA exothermic peak temperature of the 0.5 mg of the evaluation sample of the single CB was measured. Heating was executed by allowing the air to flow through the evaluation sample at a flow rate of 50 ml/min. Fig. 1 shows measurement results of the DTA exothermic peak temperatures in use of the respective catalyst species.

Furthermore, 1 g of each of the catalyst species (the specimen E1, the noble metal-based catalyst or the potassium carbonate powder) was introduced into 500 cc of water, and stirred night and day thereby to be washed. Then, the catalyst species after washing by water were filtered. The filtered catalyst species were sufficiently washed by allowing 1500cc of water to flow therethrough, and then dried. Thereafter, 200mg of each of the catalyst species (the specimen E1 and the noble metal-based catalyst) after the water washing process, and 20mg of the carbon black (CB) were accurately measured by the electronic balance. Each of the catalyst species and the carbon black were mixed for a certain time using the agate mortar such that the ratio of the catalyst species (weight) to CB (weight) was 10 : 1, and thereby two kinds of evaluation samples containing the catalyst species and carbon black were obtained. The evaluation sample made of the single CB was washed, dried, and then mixed using the agate mortar, like the other samples. The evaluation sample using the potassium carbonate as the catalyst species was dissolved in water by the water washing process, and thus the following process was not able to be performed. In other words, the evaluation samples after the water washing included three types of samples, namely, the single CB sample, the mixture of the noble metal-based catalyst and the CB, and the mixture of the specimen E1 and the CB. The DTA exothermic peak temperature of each evaluation sample was measured again using the thermal analysis-differential thermogravimetric (TG-DTA) simultaneous measurement device. Fig. 1 also shows the results of the DTA exothermic peak temperatures of the respective evaluation samples after the water washing.

As can be seen from Fig. 1, a sample using the specimen E1 and a sample using a potassium carbonate each have a low DTA exothermic peak temperature before water washing, and can cause carbon-based material (CB) to be burned at a relatively low temperature. As can be seen Fig. 1, the specimen E1 has an exothermic peak of about 450 °C, but actually starts burning of carbon black at a lower temperature (for example, of about 400 °C).

Also, as can be seen from Fig. 1, the single CB sample, the noble metal-based catalyst, and the specimen E1 hardly change the combustion promoting characteristics for the CB before and after the water washing. On the other hand, in the sample using the potassium carbonate, because the potassium carbonate is dissolved into water after the water washing, it is impossible to measure the combustion promoting characteristics of the sample.

Thus, the specimen E1 has the excellent combustion promoting characteristic for the carbon-based material, and can cause the carbon-based material to be stably burned and removed at a low temperature. Further, the specimen E1 can maintain the excellent characteristics even in the presence of water, and thus can cause the carbon-based material to be stably burned for a long time.

In the present example, the sodalite was burned at a burning temperature different from the specimen E1, thereby manufacturing three kinds of catalysts.

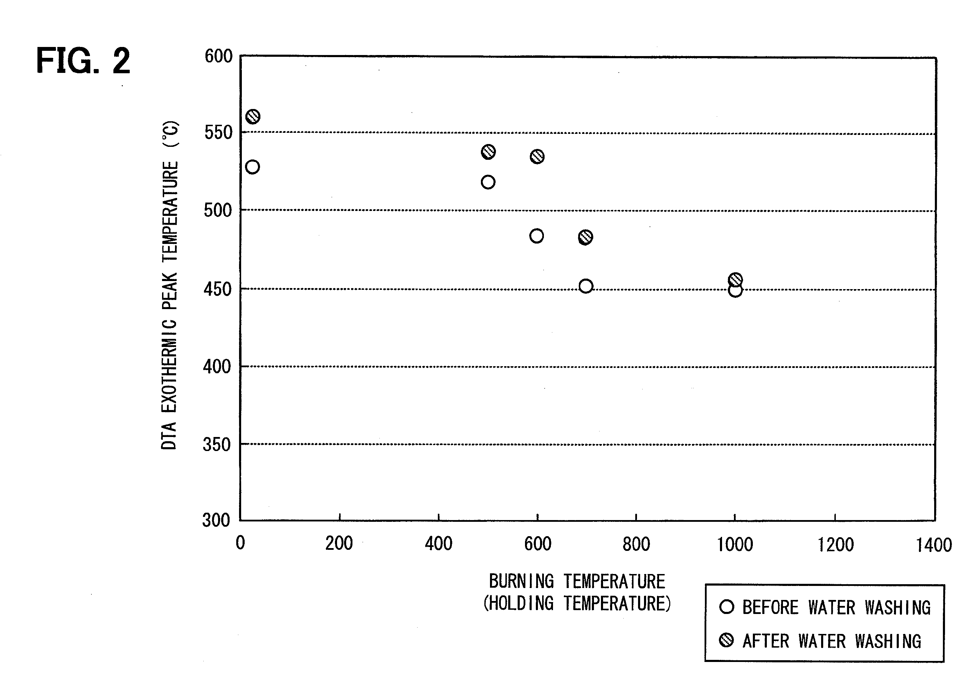

That is, in the specimen E1, the sodalite was burned at the burning temperature of 1000 °C for a holding time of 10 hours, but three kinds of catalysts were manufactured by the burning process at a burning temperature of 700 °C for the holding time of 10 hours, at a burning temperature of 600 °C for the holding time of 10 hours, and at a burning temperature of 500 °C for the holding time of 10 hours, respectively. The combustion promoting characteristics of these three combustion catalysts for the carbon-based material were examined in the same way as that of the specimen E1. At this time, the combustion promoting characteristics of sodalite powder for the carbon-based material, which powder was used for manufacturing the carbon-based material combustion catalyst as a comparative example, were examined. The sodalite powder left for about 10 hours at a room temperature of about 25 °C, instead of being burned, was used. The measurement of the combustion promoting characteristics was performed by measuring the DTA exothermic peak temperature of each catalyst in the same manner as that of the specimen E1. Fig. 2 also shows the result of the specimen E1, and the carbon-based material combustion catalyst burned at the burning temperature of 1000 °C.

As can be seen from Fig. 2, the DTA exothermic peak temperatures of the carbon-based combustion catalysts obtained by burning the sodalite at a temperature of 600 °C or more were very low values of 500 °C or less. The DTA exothermic peak temperature of the noble metal (Pt) catalyst generally used as the combustion catalyst for the carbon-based material is about 520 °C (see Fig. 1). It is clear that these carbon-based material combustion catalysts each have the sufficiently excellent catalytic activity for the carbon based material.

The carbon-based material combustion catalyst obtained by being burned at a temperature of 600 °C or more also has the DTA exothermic peak temperature that is equal to or lower than the DTA exothermic peak temperature of the noble metal (Pt) catalyst after the water washing, and can maintain the excellent catalytic activity after the water washing.

In contrast, the catalyst obtained by being burned at a temperature of 500 °C exhibited the DTA exothermic peak temperature of about 520 °C of the same level as that of the noble metal (Pt) catalyst before the water washing. However, after the water washing, the DTA exothermic peak temperature of the catalyst was increased up to about 540 °C and the catalytic activity thereof was reduced as compared to the noble metal catalyst. The sodalite not burned had the insufficient catalytic activity for combustion of the carbon-based material regardless of before or after the water washing.

In the present example, various types of zeolites other than the sodalite (SOD) were burned for comparison with the specimen E1, and then the combustion promoting characteristics were examined using these catalysts.

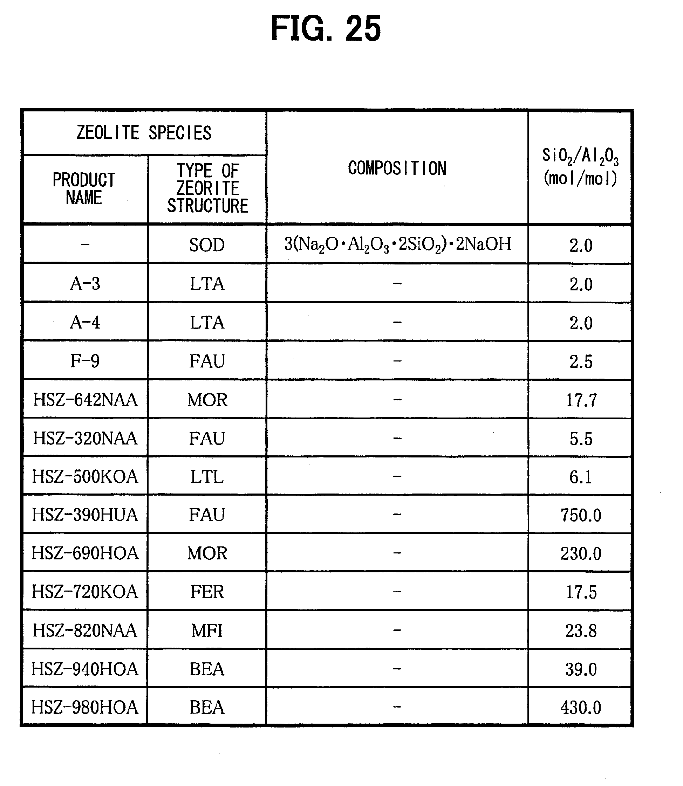

Specifically, first, twelve kinds of zeolites with different zeolite structures (e.g., the BEA type, the FAU type, the FER type, the LTA type, the LTL type, the MFI type, and the MOR type) and/or different ratios of SiO₂/Al₂O₃ of the zeolite composition were prepared as the zeolite other than sodalite (see Fig. 25).

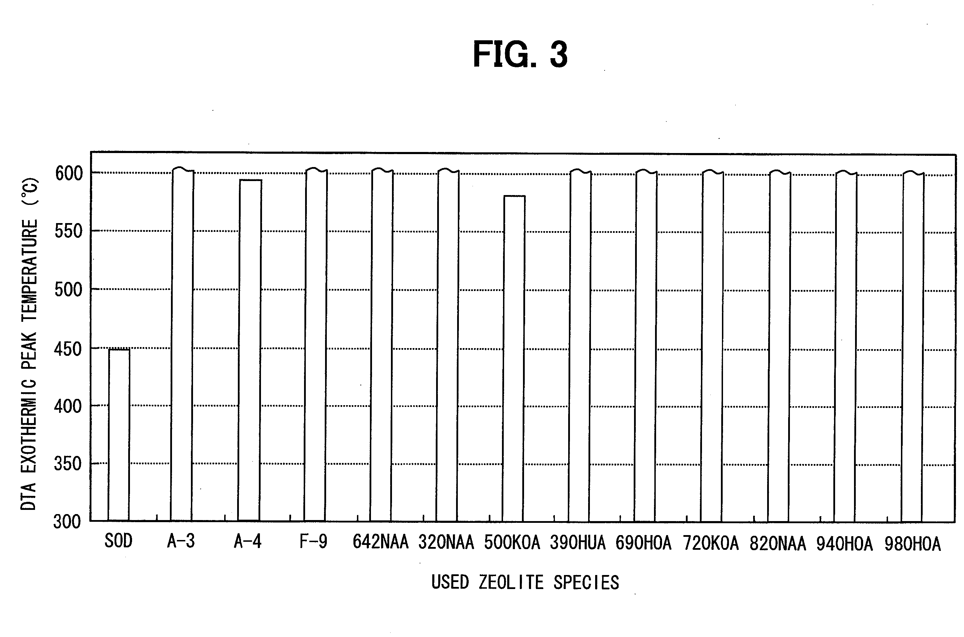

These zeolites are all manufactured by Tosoh Corporation. Fig. 25 shows a product name of each zeolite, the type of a zeolite structure, and the ratio of SiO₂/Al₂O₃. The names of the zeolites shown in Figs. 25 and 3 to be described later correspond to the product names of zeolites manufactured by Tosoh Corporation. Fig. 25 also shows sodalite (SOD) used for manufacturing the specimen E1.

Then, various zeolites shown in Fig. 25 were burned in the same way as that of the specimen E1. Specifically, each kind of zeolite was heated at the temperature increasing rate of 100 °C/hr. After the temperature of the solid reached the burning temperature of 1000 °C, the solid was maintained for 10 hours thereby to be subjected to the burning step. Thereafter, the thus-obtained burned material was pulverized so as to have a median diameter of 10 µm or less and a maximum grain size of 100 µm or less, thereby obtaining the powdered catalyst. The combustion promoting characteristics for carbon-based material of these catalysts were examined in the same way as that of the specimen E1. Note that the combustion promoting characteristics of the catalysts after the water washing were not performed. Fig. 3 shows the results thereof. Fig. 3 also shows the result of the specimen E1 obtained by burning the sodalite as "SOD".

As can be seen from Fig. 3, when the material made by burning zeolite other than sodalite was used as the catalyst, the DTA exothermic peak temperature of the catalyst was very high, and the combustion promoting characteristics of the catalyst for the carbon-based material was insufficient. In contrast, the catalyst made by burning the SOD (specimen E1) exhibited a very low DTA exothermic peak temperature of about 450 °C. Thus, the catalyst can cause the carbon-based material to be burned at a low temperature. Thus, it is necessary to adopt the sodalite among the zeolites in the burning step.

As mentioned above, in the present example, burning the sodalite at a temperature of 600 °C or more can provide the carbon-based material combustion catalyst that can cause the carbon-based material to be stably burned and removed at a low temperature for a long time.

### (Example 2)

In the present example, a carbon-based material combustion catalyst is manufactured by a mixing step, a drying step, and a burning step.

That is, in the mixing step, the aluminosilicate having the atomic equivalent ratio of Si/Al ≥ 1, and the alkali metal source and/or an alkaline earth metal source are mixed in water. Then, in the drying step, a liquid mixture after the mixing step is heated to evaporate water, thereby obtaining a solid. Thereafter, in the burning step, the solid is burned at a temperature of 600 °C or more thereby to obtain the carbon-based material combustion catalyst.

Specifically, first, sodalite (3(Na₂O.Al₂O₃.2SiO₂).2NaOH) powder was prepared as the aluminosilicate having the atomic equivalent ratio of Si/Al ≥ 1. Then, 100 parts by weight of sodalite and 5 parts by weight of potassium carbonate were introduced into water, and mixed in water.

Then, the liquid mixture was heated at a temperature of 120 °C to evaporate water. Thus, a solid that is mixture of sodalite and potassium carbonate was obtained.

Then, the solid was burned at a temperature of 800 °C. Specifically, the solid was heated at the temperature increasing rate of 100 °C/hr. After the temperature of the solid reached the burning temperature of 800 °C, the solid was maintained for 10 hours thereby to be subjected to the burning step.

Thereafter, the thus-obtained burned material was pulverized so as to have a median diameter of 10 µm or less and a maximum grain size of 100 µm or less, thereby obtaining the carbon-based material combustion catalyst. The carbon-based material combustion catalyst was referred to as a "specimen E2".

Next, the combustion promoting characteristics for the carbon-based material of the carbon-based material combustion catalyst (specimen E2) manufactured in the present example were examined. As a comparative example, combustion promoting characteristics of a noble metal-based catalyst (Pt powder), and potassium carbonate powder were also examined.

Specifically, first, four kinds of evaluation samples, namely, a single CB sample, a mixture of a noble metal-based catalyst and CB, a mixture of the specimen E2 and CB, and a mixture of potassium carbonate and CB were manufactured in the same way as that in Example 1.

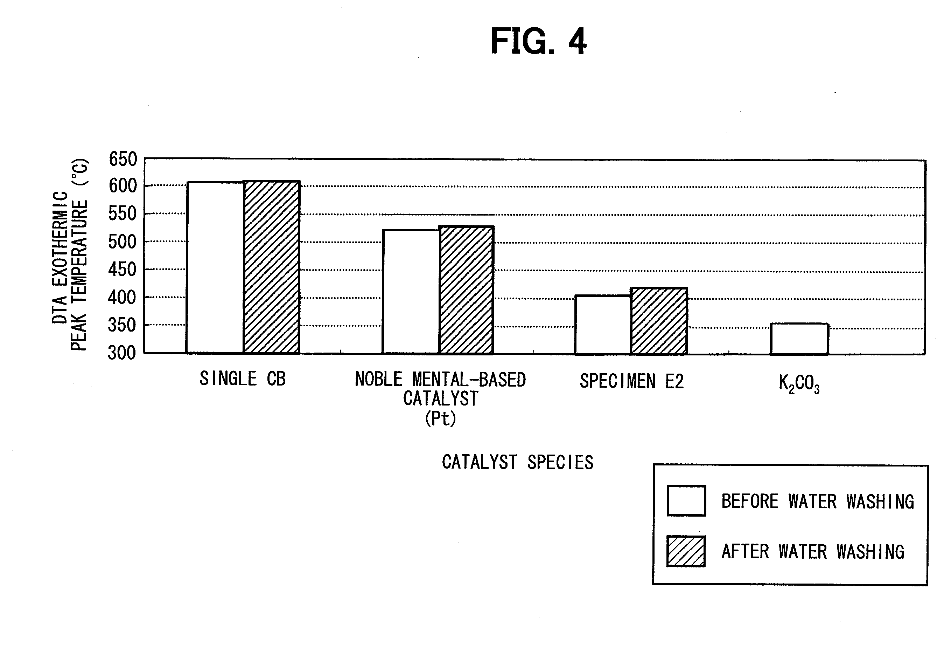

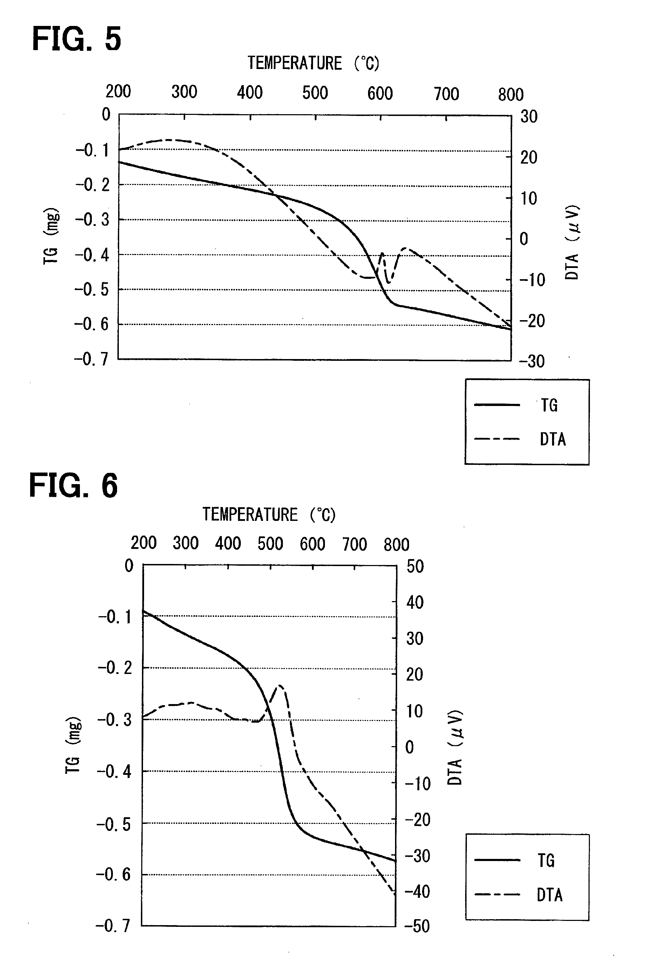

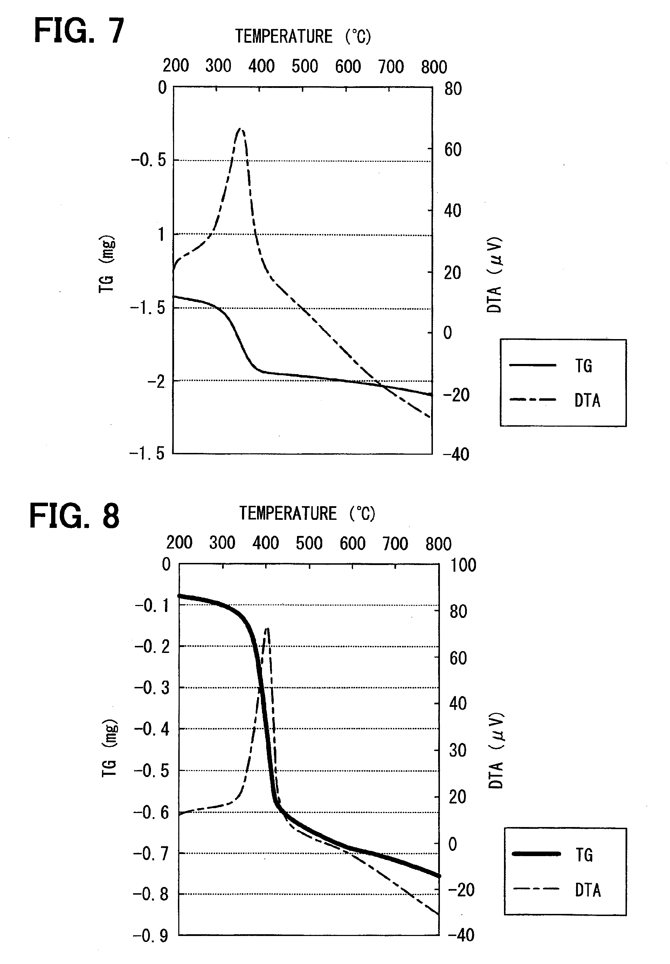

Then, 6mg of each evaluation sample was heated up to the maximum temperature of 900 °C at the temperature increasing rate of 10 °C/min thereby to burn the CB. At this time, a DTA exothermic peak temperature of each evaluation sample, and a relationship between the temperature and TG of the sample were measured using a thermal analysis - differential thermogravimetric (TG-DTA) simultaneous measurement device ("TG8120" manufactured by Rigaku Industrial Co. Ltd). The DTA exothermic peak temperature of 0.5 mg of the evaluation sample consisting of the single CB was measured. Heating was executed by allowing the air to flow through the evaluation sample at a flow rate of 50 ml/min. Fig. 4 shows the measurement results of the DTA exothermic peak temperatures in use of the respective catalyst species. Fig. 5 shows the measurement results of the relationship between the temperature and the TG using the single CB. Fig. 6 shows the results in use of the noble metal-based catalyst as the catalyst species. Fig. 7 shows the results in use of K₂CO₃. Fig. 8 shows the results in use of the specimen E2. In each of Figs. 5 to 8, the longitudinal axis indicates the DTA exothermic peak temperature indicative of the maximum combustion rate of the carbon black.

Furthermore, 1 g of each of the catalyst species (the specimen E2, the noble metal-based catalyst, and the potassium carbonate powder) was introduced into 500 cc of water, and stirred night and day thereby to be washed. Then, the catalyst species after washing by water were filtered. The filtered catalyst species were sufficiently washed by allowing 1500cc of water to flow therethrough, and then dried at a temperature of 120 °C. Thereafter, 200mg of each of the catalyst species (the specimen E2 and the noble metal-based catalyst) after the water washing process and 20mg of the carbon black (CB) were accurately measured by the electronic balance. Each of the catalyst species and the carbon black were mixed for a certain time using the agate mortar such that the ratio of the catalyst species (weight) to CB (weight) was 10 : 1, and thereby two kinds of evaluation samples containing the catalyst species and carbon black were obtained. The evaluation sample made of the single CB was washed, dried, and then mixed using the agate mortar, like the other samples. The evaluation sample using the potassium carbonate as the catalyst species was dissolved in water by the water washing process, and thus the following process was not able to be performed. In other words, the evaluation samples manufactured after the water washing included three types of samples, namely, the single CB sample, the mixture of the noble metal-based catalyst and the CB, and the mixture of the specimen E2 and the CB. The DTA exothermic peak temperatures of the evaluation samples were measured again using the thermal analysis-differential thermogravimetric (TG-DTA) simultaneous measurement device. Fig. 4 also shows the results of the DTA exothermic peak temperatures of the respective evaluation samples after the water washing.

As can be seen from Figs. 4 to 8, the sample using the specimen E2 and the sample using the potassium carbonate each have a low DTA exothermic peak temperature before the water washing, and thus can cause the carbon-based material (CB) to be burned at a relatively low temperature. From Figs. 4 and 8, it can be seen that the specimen E2 has the DTA exothermic peak temperature of about 400 °C, but the combustion of carbon black is actually started even at a lower temperature (for example, 350 °C) than the DTA exothermic peak temperature.

As can be seen from Fig. 4, the single CB sample, the noble metal-based catalyst, and the specimen E2 hardly changed the combustion promoting characteristics for the CB before and after the water washing. In contrast, in the sample using potassium carbonate, the potassium carbonate was dissolved into water after the water washing, and thereby it is impossible to measure the combustion promoting characteristics.

Accordingly, the specimen E2 exhibits the excellent combustion promoting characteristics for the carbon-based material, and thus can cause the carbon-based material to be stably burned and removed at a low temperature. Since the specimen E2 can maintain the excellent characteristics even in the presence of water, the specimen E2 can cause carbon-based material to be stably burned and removed for a long time.

The above-mentioned specimen E2 is a catalyst manufactured by burning a mixture of 100 parts by weight of sodalite and 5 parts by weight of potassium carbonate at a temperature of 800 °C for 10 hours. Then, in the present example, in order to examine an influence of the burning temperature on the catalytic activity, the mixture (solid) of sodalite and potassium carbonate was burned at different temperatures to manufacture a plurality of catalysts.

Specifically, first, 100 parts by weight of sodalite and 10 parts by weight of potassium carbonate were mixed into water to obtain a liquid mixture. Then, the liquid mixture was heated at a temperature of 120 °C to evaporate water, thereby obtaining the solid (mixture). Then, the mixture was burned at different burning temperatures, for example, 500 °C, 600 °C, 700 °C, 800 °C, 900 °C, 1000 °C, 1100 °C, 1200 °C, and 1300 °C, thereby obtaining nine kinds of catalysts. These catalysts were manufactured in the same manner except for changing the burning temperature, and in the same way as that of the specimen E2 except for changing the mixing ratio of potassium carbonate to the sodalite and the burning temperature. Furthermore, in order to examine an influence of a burning time in burning at a temperature of 600 °C, not only the catalyst formed through burning for 10 hours like the specimen E2, but also a catalyst formed through burning for a burning time of 5 hours were prepared. The burning of the other catalysts manufactured through burning at the other burning temperatures was performed for ten hours, like the specimen E2.

The combustion promoting characteristics of these catalysts for the carbon-based material were examined in the same way as that of the specimen E2. At this time, the combustion promoting characteristics of the mixture of sodalite and potassium carbonate for the carbon-based material as a comparative example were also examined. The mixture of the sodalite and potassium carbonate used was one left for about 10 hours at a room temperature of about 25 °C) instead of being burned.

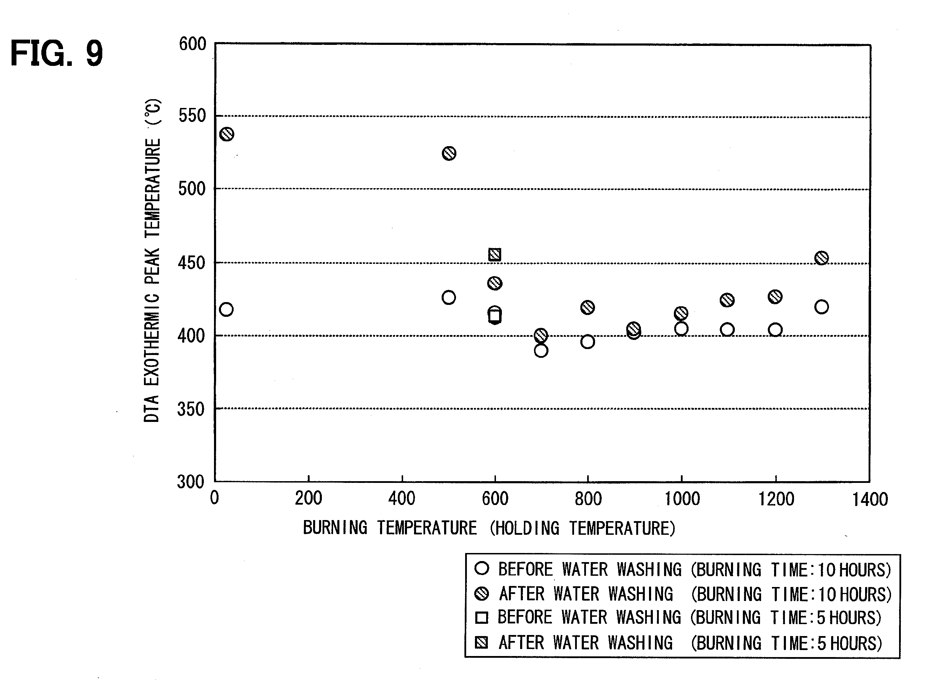

The measurement of the combustion promoting characteristics was performed by measuring the DTA exothermic peak temperature in the same way as that of the specimen E2. Fig. 9 shows the results thereof.

As can be seen from Fig. 9, the DTA exothermic peak top temperature of the carbon-based material combustion catalyst manufactured by the burning at a temperature of 600 °C or more was equal to or less than about 460 °C before and after the water washing, which was very low. The DTA exothermic peak temperature of the noble metal (Pt) catalyst generally used as the combustion catalyst for the carbon-based material is about 520 °C (see Fig. 4). Thus, it can be seen that such a carbon-based material combustion catalyst has the sufficiently excellent catalytic activity for the carbon-based material.

In contrast, the catalyst burned at a temperature below 600 °C exhibited a sufficient low DTA exothermic peak temperature as compared to that of the noble metal (Pt) catalyst before the water washing, and exhibited the excellent catalytic activity. However, after the water washing, the DTA exothermic peak temperature of the catalyst was greatly increased, and the catalytic activity thereof was reduced as compared to the noble metal catalyst. The mixture of the sodalite not burned and potassium carbonate had the sufficient catalytic activity before the water washing, but had a catalytic activity greatly reduced after the washing.

The reason why the catalyst obtained by the burning step at the temperature below 600 °C and the catalyst obtained without the burning step had the catalytic activity greatly reduced after the water washing as described above is due to the elution of potassium after the water washing.

Thus, it is necessary to perform the burning step at a burning temperature of 600 °C or more. As can be seen from Fig. 9, burning at a temperature of 700 to 1200 °C can obtain the carbon-based material combustion catalyst having the lower DTA exothermic peak temperature, that is, the excellent catalytic activity. Furthermore, also as can be seen from the same figure, the reduction in catalytic activity after the water washing of the catalyst burned for 10 hours is suppressed as compared to the case of the catalyst burned for 5 hours.

In the examples as described above, in the mixing step, potassium carbonate was mixed as a K source with the sodalite to manufacture the carbon-based material combustion catalyst. In the present example, different kinds of potassium salts were mixed with the sodalite to manufacture a plurality of carbon-based material combustion catalysts, and then the DTA exothermic peak top temperatures of the catalysts were examined.

Specifically, each of potassium salts (e.g., potassium carbonate, potassium nitrate, potassium chloride, potassium sulfate, potassium acetate, potassium phosphate, and potassium hydrate) was mixed with the sodalite to obtain a mixture. Each potassium salt was mixed with the sodalite such that the amount of a potassium element of the potassium salt was 0.225 mol or 0.00225 mol with respect to 1 mol of a Si element of the sodalite. The mixing was performed in water like the specimen E2, and the water of the liquid mixture was dried thereby to obtain a mixture as described above.

Then, the mixture was heated at a temperature increasing rate of 100 °C/hr. After the temperature of the solid reached the burning temperature of 1000 °C, the mixture was maintained for 10 hours thereby to be subjected to the burning step. Thereafter, the thus-obtained burned material was pulverized so as to have a median diameter of 10 µm or less and a maximum grain size of 100 µm or less, thereby obtaining the carbon-based material combustion catalyst.

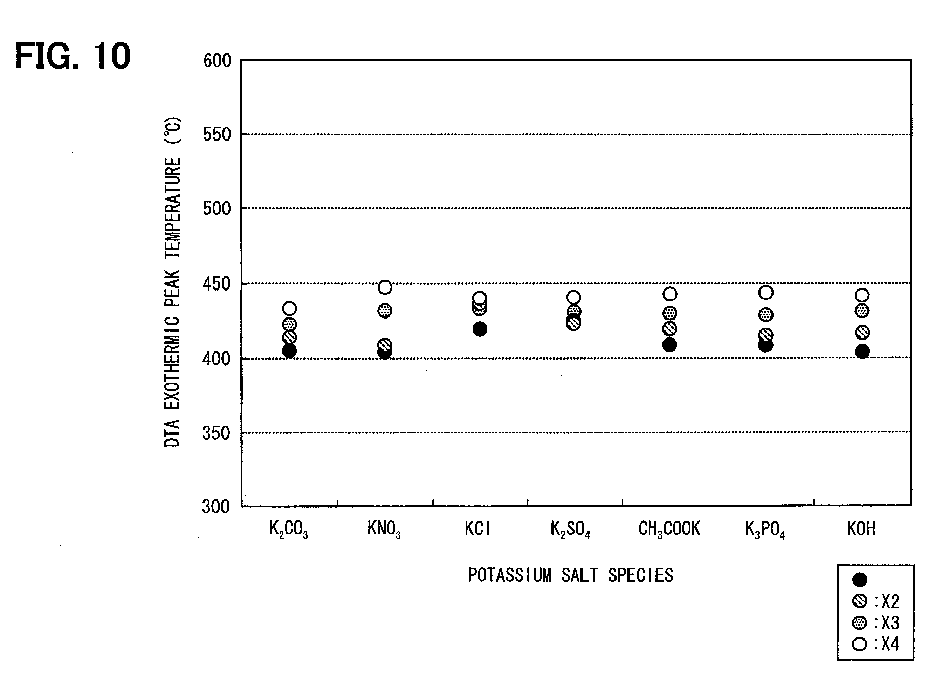

The DTA exothermic peak temperature of each of the thus-obtained combustion catalysts before and after the water washing was measured in the same way as that of the specimen E2. Fig. 10 shows the results thereof. In Fig. 10, reference numeral X1 indicates a state before the water washing in which the amount of the alkali metal element (K amount) of each alkali metal salt, or the amount of the alkaline earth metal element (K amount) of the alkaline earth metal salt is 0.225 mol with respect to 1 mol of the Si element of the sodalite. Reference numeral X2 indicates a state after the water washing in which the amount of the alkali metal element (K amount) of each alkali metal salt, or the amount of the alkaline earth metal element (K amount) of the alkaline earth metal salt is 0.225 mol with respect to 1 mol of the Si element of the sodalite. Reference numeral X3 indicates a state before the water washing in which the amount of the alkali metal element (K amount) of each alkali metal salt, or the amount of the alkaline earth metal element (K amount) of the alkaline earth metal salt is 0.00225 mol with respect to 1 mol of the Si element of the sodalite. Reference numeral X4 indicates a state after the water washing in which the amount of the alkali mental element (K amount) of each alkali metal salt, or the amount of the alkaline earth metal element (K amount) of the alkaline earth metal salt is 0.00225 mol with respect to 1 mol of the Si element of the sodalite.

As can be seen from Fig. 10, any carbon-based material combustion catalyst manufactured using any one of potassium salts exhibits the excellent catalytic activity before and after the water washing. Decreasing the amount of potassium salt slightly reduces the catalytic activity. Even in this case, the catalyst maintains the DTA exothermic peak top temperature below 450 °C before and after the water washing, while exhibiting the excellent catalytic activity.

In the above-mentioned example, in the mixing step, the potassium salt was mixed as the alkali metal source (e.g., alkali metal salt) with the sodalite to manufacture the carbon-based material combustion catalyst. Then, in the present example, various alkali metal sources or alkaline earth metal sources in addition to the potassium salt were mixed with the sodalite in the mixing step to manufacture a plurality of carbon-based material combustion catalysts. The DTA exothermic peak top temperatures of these catalysts were examined.

Specifically, first, each of various alkali metal salts (e.g., sodium carbonate, potassium carbonate, rubidium carbonate, and cesium carbonate), or each of various alkaline earth metal salts (e.g., magnesium hydrate, calcium carbonate, strontium carbonate, and barium carbonate) was mixed with the sodalite to obtain a mixture. Each alkali metal salt or alkaline earth metal salt was mixed with the sodalite such that the amount of the alkali metal element of each alkali metal salt, or the amount of the alkaline earth metal element of the alkaline earth metal salt was 0.225 mol or 0.00225 mol with respect to 1 mol of the Si element of the sodalite. Furthermore, the mixing was performed in water in the same way as that of the specimen E2, and the liquid mixture was dried to evaporate water as mentioned above, thereby obtaining a mixture.

Then, the mixture was heated at a temperature increasing rate of 100 °C/hr. After the temperature of the mixture reached the burning temperature of 1000 °C, the sodalite was maintained for 10 hours thereby to perform the burning step. Thereafter, the thus-obtained burned material was pulverized so as to have a median diameter of 10 µm or less and a maximum grain size of 100 µm or less, thereby obtaining the carbon-based material combustion catalyst.

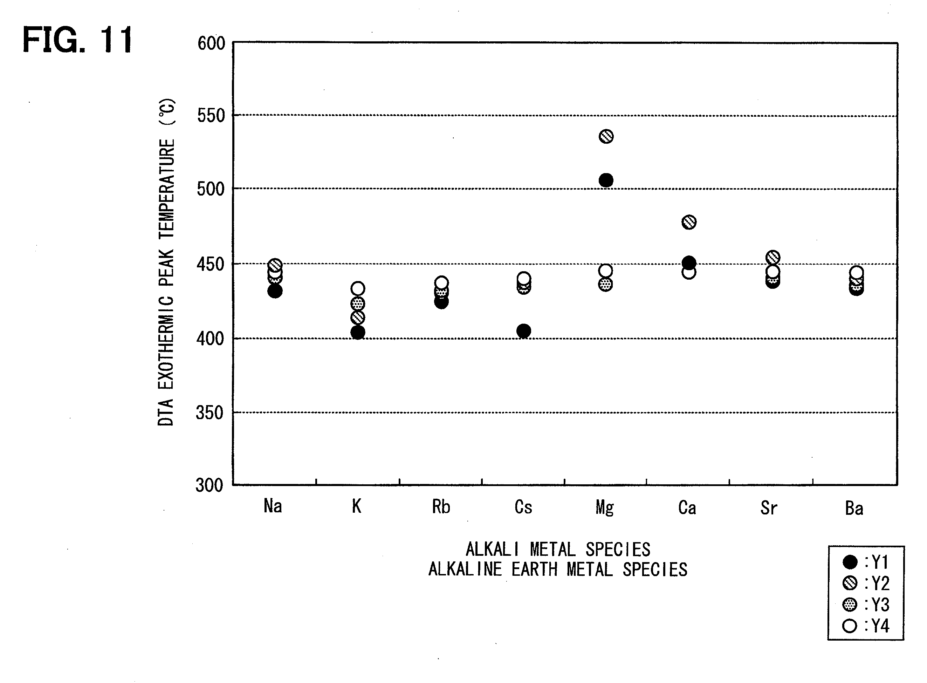

The DTA exothermic peak temperatures of the thus-obtained carbon-based material combustion catalysts were examined in the same way as that of the specimen E2. Fig. 11 shows the results thereof. In Fig. 11, the lateral axis indicates alkali metal species of the alkali metal source and alkaline earth metal species of the alkaline earth metal source added in the mixing step, and the longitudinal axis indicates the DTA exothermic peak temperatures. In Fig. 11, reference numeral Y1 indicates a state before the water washing in which the amount of the alkali metal element of the alkali metal source, or the amount of the alkaline earth metal element of the alkaline earth metal source is 0.225 mol with respect to 1 mol of the Si element of the sodalite. In Fig. 11, reference numeral Y2 indicates a state after the water washing in which the amount of the alkali metal element of the alkali metal source, or the amount of the alkaline earth metal element of the alkaline earth metal source is 0.225 mol with respect to 1 mol of the Si element of the sodalite. In Fig. 11, reference numeral Y3 indicates a state before the water washing in which the amount of the alkali metal element of the alkali metal source, or the amount of the alkaline earth metal element of the alkaline earth metal source is 0.00225 mol with respect to 1 mol of the Si element of the sodalite. In Fig. 11, reference numeral Y4 indicates a state after the water washing in which the amount of the alkali metal element of the alkali metal source, or the amount of the alkaline earth metal element of the alkaline earth metal source is 0.00225 mol with respect to 1 mol of the Si element of the sodalite.

As can be seen from Fig. 11, the carbon-based material combustion catalyst manufactured by mixing each of various alkali metal elements (for example, Na, K, Rb, Cs) with the sodalite in the mixing step exhibits the excellent catalytic activity before and after the water washing even in use of any one of the alkali metal elements.

In contrast, the combustion catalysts were manufactured by mixing various alkali earth metal elements (for example, Mg, Ca, Sr, Ba) with the sodalite in the mixing step. Although only the catalyst obtained by selecting Mg as the alkali earth metal element exhibited the slightly insufficient catalytic activity, any one of the obtained catalysts exhibited the catalytic activity of an acceptable level in practical use in any case.

In this way, mixing other alkali metal elements or alkaline earth metal elements other than K with the sodalite can also obtain the carbon-based material combustion catalyst having the excellent catalytic activity.

The case of using a Mg source as the alkaline earth metal source will be described below in detail. As can be seen from Fig. 11, the catalyst obtained by adding 0.00225 mol of Mg to the sodalite with respect to 1 mol of Si element of the sodalite exhibits the excellent catalytic activity. In contrast, the catalyst obtained by adding 0.225 mol of Mg can be actually used, but results in reduction in catalytic activity. On the other hand, the catalysts made using other alkaline earth metal elements (for example, Ca, Sr, Ba) exhibits the excellent catalytic activity in any case.

Accordingly, in selecting the alkaline earth metal source, an alkaline earth metal source other than Mg is preferably used. In use of the Mg source, the Mg source and the sodalite are mixed such that the amount of Mg of the Mg source is preferably less than 0.225 mol, and more preferably 0.00225 mol or less with respect to 1 mol of Si element of the sodalite.

In the above-mentioned example, in the mixing step, one kind of alkali metal or alkaline earth metal was mixed with the sodalite to manufacture the carbon-based material combustion catalyst. Then, in the present example, a plurality of alkali metal elements and/or alkaline earth metal elements were mixed with the sodalite in the mixing step to manufacture the carbon-based material combustion catalysts. The DTA exothermic peak temperatures of the catalysts were measured.

Specifically, first, the alkali metal source (e.g., sodium carbonate, rubidium carbonate, or cesium carbonate) or the alkaline earth metal source (e.g., magnesium hydrate, calcium carbonate, strontium carbonate, or barium carbonate) in addition to the potassium carbonate were mixed with the sodalite to obtain mixtures. Each of the thus-obtained mixtures contains the sodalite, the potassium carbonate, and the alkali metal source other than potassium carbonate or the alkaline earth metal source.

Each mixture was manufactured in the following way. That is, the potassium carbonate as the potassium source was added to the sodalite such that the amount of potassium of the potassium carbonate was 0.1125 mol with respect to 1 mol of the Si element of the sodalite. Then, each of various alkali metal sources or alkaline earth metal sources was added to the sodalite such that the amount of alkali metal element of the alkali metal source or the amount of alkaline earth metal element of the alkaline earth metal source was 0.1125 mol with respect to 1 mol of the Si element of the sodalite.

Thus, the sum of the amount of potassium of the potassium carbonate and of the amount of another alkali metal element or alkaline earth metal element was 0.225 mol with respect to 1 mol of the Si element of the sodalite in each mixture.

The mixing was performed in water in the same way as that of the specimen E2, and the mixture was dried to evaporate water as mentioned above, thereby obtaining a mixture.

Then, the mixture was heated at a temperature increasing rate of 100 °C/hr. After the temperature of the sodalite reached the burning temperature of 1000 °C, the mixture was maintained for 10 hours thereby to perform the burning step of the mixture. Thereafter, the thus-obtained burned material was pulverized so as to have a median diameter of 10 µm or less and a maximum grain size of 100 µm or less, thereby obtaining the carbon-based material combustion catalyst.

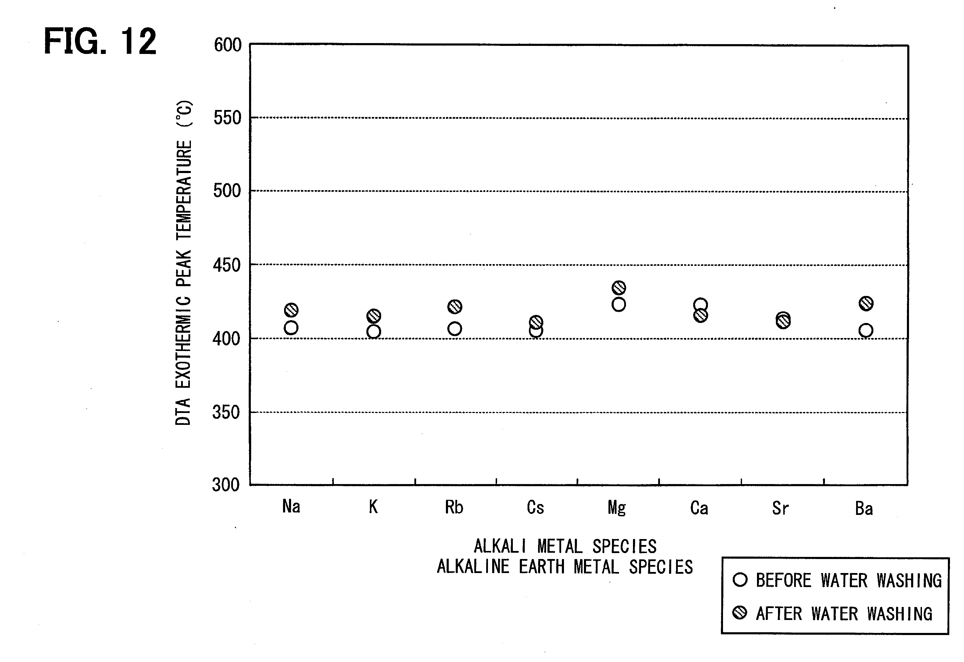

The DTA exothermic peak temperatures of the thus-obtained carbon-based material combustion catalysts before and after the water washing were examined in the same manner as that of the specimen E2. Fig. 12 shows the results thereof. In Fig. 12, the longitudinal axis indicates the DTA exothermic peak temperature, and the lateral axis indicates alkali metal species of the alkali metal source or alkaline earth metal species of the alkaline earth metal source, other than potassium carbonate, added in the mixing step. Fig. 12 also indicates the DTA exothermic peak temperature of the carbon-based material combustion catalyst (i.e., sample indicated by reference numeral K on the lateral axis in Fig. 12) before and after the water washing, which catalyst was manufactured by mixing the only potassium carbonate with the sodalite and burning the mixture.

As can be seen from Fig. 12, in the mixing step, when each of various alkali metal elements (for example, Na, Rb, Cs) or alkaline earth metal elements (for example, Mg, Ca, Sr, Ba) in addition to potassium (K) is mixed with the sodalite, the carbon-based material combustion catalyst having excellent catalytic activity is also obtained like the case of singly mixing the K with the sodalite.

In this way, by the use of a plurality of alkali metal sources and/or alkali earth metal sources in the mixing step, the carbon-based material combustion catalysts having the excellent catalytic activity can be provided.

Next, in the present example, in order to examine an influence of the addition amount of the alkali metal source or alkaline earth metal source on the catalytic activity of the combustion catalyst, sodalite was mixed with the alkali metal source or alkaline earth metal source at different addition ratios to manufacture a plurality of carbon-based material combustion catalysts. Then, the DTA exothermic peak temperatures of these catalysts were measured.

First, potassium carbonate or barium carbonate was mixed in an addition amount of 0 to 100 parts by weight with 100 parts by weight of sodalite to obtain mixtures.

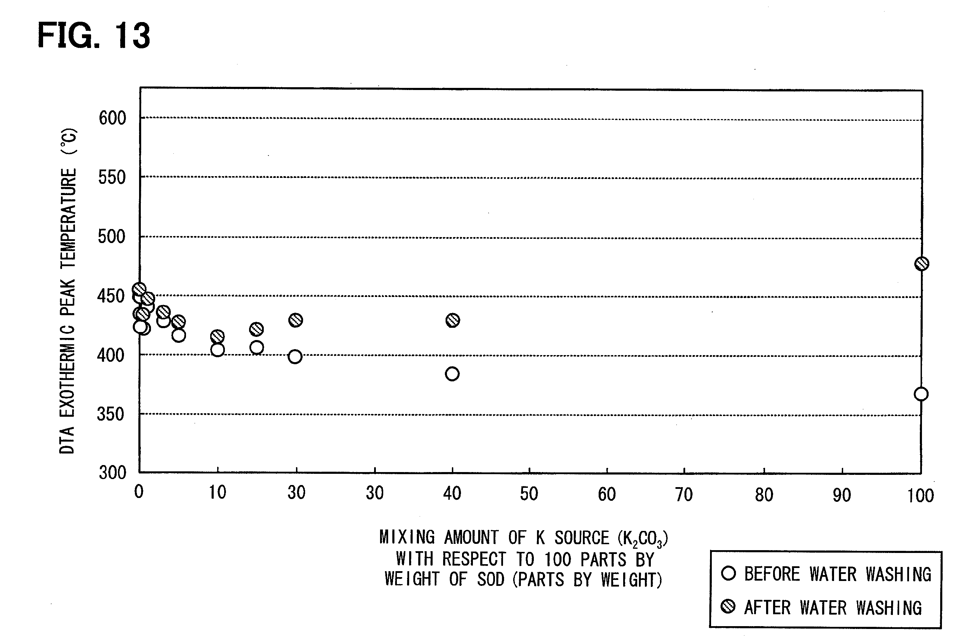

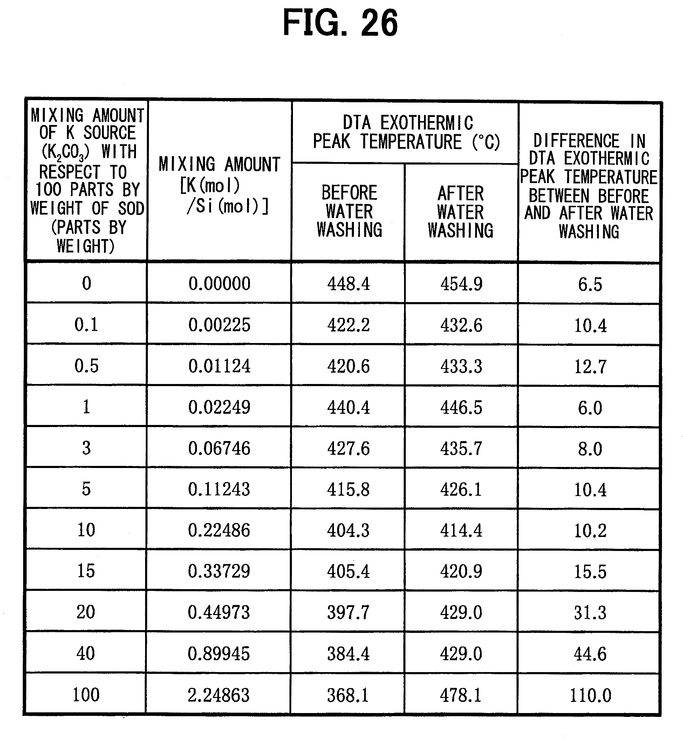

Specifically, as shown in Figs. 13 and 26 to be described later, 100 parts by weight of sodalite (SOD) was mixed with potassium carbonate in the respective amounts of 0 part by weight, 0.1 parts by weight, 0.5 parts by weight, 1 part by weight, 3 parts by weight, 5 parts by weight, 10 parts by weight, 15 parts by weight, 20 parts by weight, 40 parts by weight, and 100 parts by weight thereby to obtain mixtures.

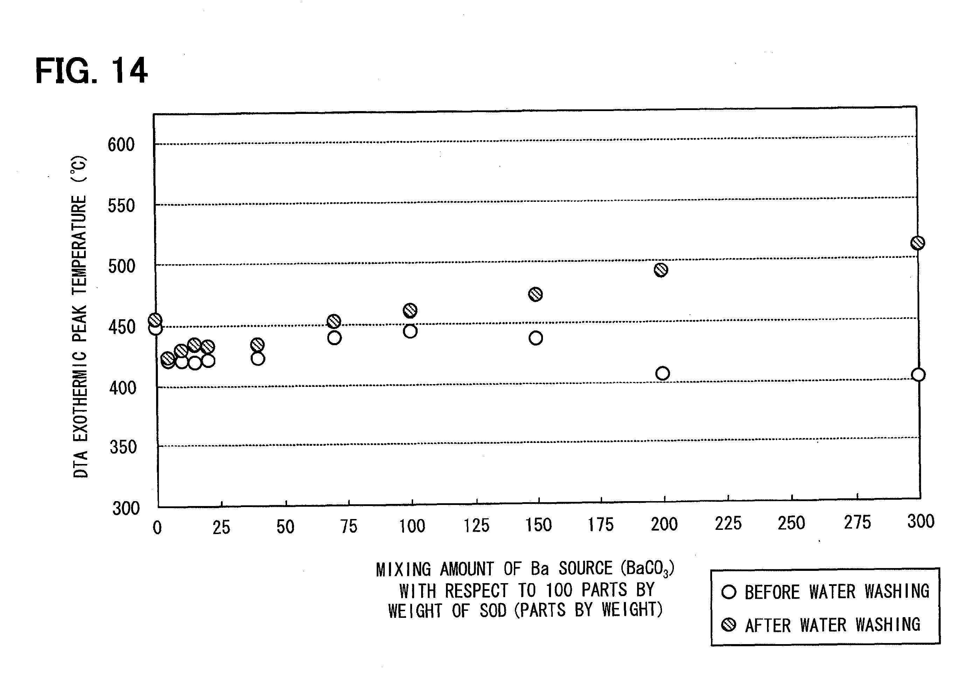

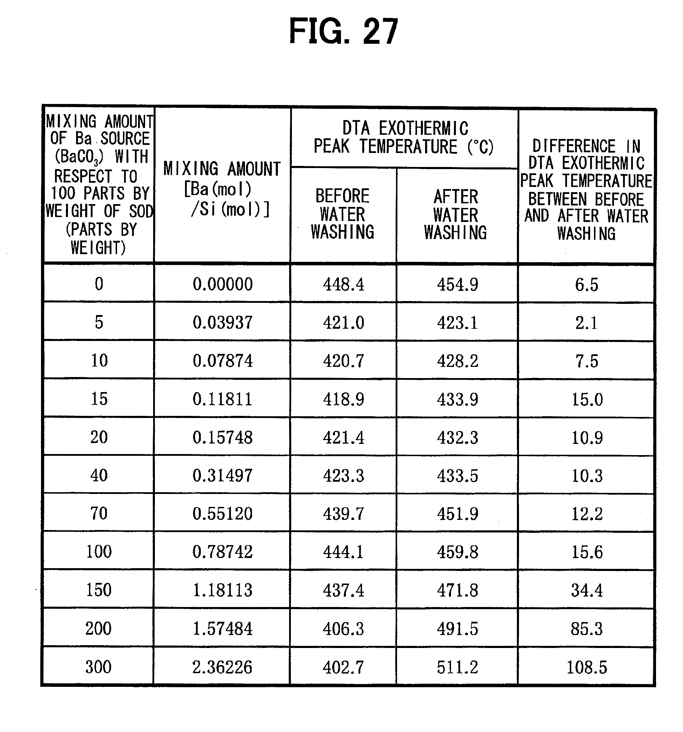

As shown in Figs. 14 and 27 to be described later, 100 parts by weight of sodalite (SOD) was mixed with barium carbonate in the respective amounts of 0 part by weight, 5 parts by weight, 10 parts by weight, 15 part by weight, 20 parts by weight, 40 parts by weight, 70 parts by weight, 100 parts by weight, 150 parts by weight, 200 parts by weight, and 300 parts by weight thereby to obtain mixtures.

Such mixing was performed in water in the same way as that of the specimen E2, and the liquid mixtures were dried to evaporate water as described above, thereby obtaining a plurality of mixtures.

Then, these mixtures were heated at a temperature increasing rate of 100 °C/hr. After the temperature of the mixture reached 1000 °C, the mixture was maintained for 10 hours thereby to be subjected to the burning step. Thereafter, the thus-obtained burned material was pulverized so as to have a median diameter of 10 µm or less and a maximum grain size of 100 µm or less, thereby obtaining the carbon-based material combustion catalyst.

The DTA exothermic peak temperatures of the thus-obtained carbon-based combustion catalysts before and after the water washing were measured in the same way as that of the specimen E2.

Figs. 13 and 26 show the results of the DTA exothermic peak temperatures before and after the water washing of the carbon-based material combustion catalysts manufactured using potassium carbonate. Figs. 14 and 27 show the results of the DTA exothermic peak temperatures before and after the water washing of the carbon-based material combustion catalysts manufactured using barium carbonate.

Fig. 26 shows values obtained by converting the amount (parts by weight) of mixing of the K element to 100 parts by weight of sodalite, into the amount of mixing of the K element (mol) with respect to the Si amount (mol) of the sodalite (see Fig. 26). Likewise, Fig. 27 shows values obtained by converting the amount (parts by weight) of mixing of the Ba element to 100 parts by weight of sodalite, into the amount of mixing of the Ba element (mol) with respect to the Si amount (mol) of the sodalite (see Fig. 27).

As can be seen from Figs. 26, 27, 13, and 14, even when the amount of alkali metal element and/or the amount of alkaline earth metal element is changed in the mixing step, the carbon-based material combustion catalysts obtained exhibits the excellent catalytic activity.

In contrast, the increase in amount of the alkali metal element or alkaline earth metal element increases a difference in DTA exothermic peak temperature between before and after the water washing. As can be seen from Fig. 26 and 27, the sodalite is mixed with the alkali metal source or alkaline earth metal source in the mixing step such that the amount of alkali metal element (K) contained in the alkali metal source (K₂CO₃), or the amount of alkaline earth metal element (Ba) contained in the alkaline earth meal source contained in the alkaline earth metal source (BaCO₃) is equal to or less than 2.25 mol with respect to 1 mol of Si element of the sodalite. Thus, it is possible to manufacture the carbon-based material combustion catalyst having a relatively small difference in DTA exothermic peak temperature between before and after the water washing, that is, the carbon-based material combustion catalyst having the excellent resistance to water. When the above-mentioned alkali metal element amount or alkaline earth metal element amount exceeds 2.25 mol, the mixture is once melted easily in burning, and thereby it is difficult for the carbon-based material combustion catalyst obtained after the burning to be pulverized.

From the same viewpoint, the amount of alkali metal element (mol) or the amount of alkaline earth metal element (mol) is more preferably equal to or less than 1 mol, and further more preferably equal to or less than 0.5 mol with respect to 1 mol of Si element of the sodalite in the mixing step.

As mentioned above, according to the present example, the mixing step and the burning step are performed to manufacture the carbon-based material combustion catalyst such that carbon-based material can be stably burned and removed at a low temperature for a long time.

### (Example 3)

In the present example, a catalyst carrier 2 supporting the carbon-based material combustion catalyst (specimen E2) manufactured in Example 2 on a ceramic substrate having a ceramic honeycomb structure 22 is manufactured.

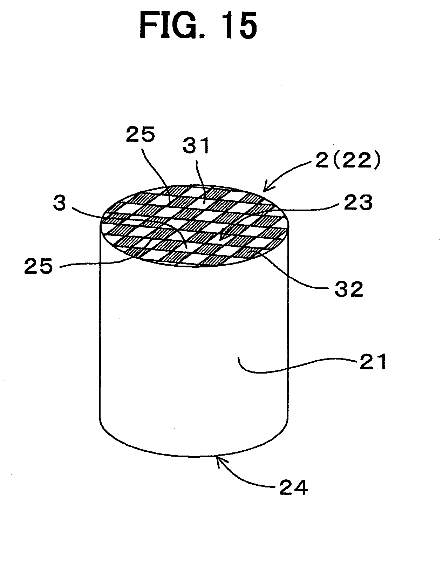

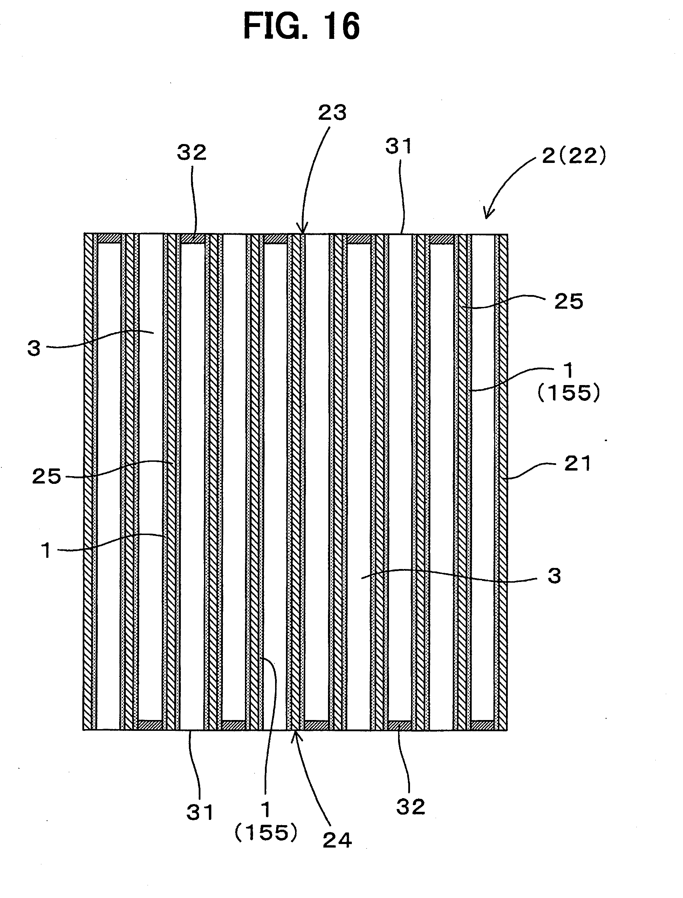

As shown in Figs. 15 to 17, the ceramic substrate 22 of the present example includes an outer peripheral wall 21, partition walls 25 formed in a honeycomb shape inside the outer peripheral wall 21, and a plurality of cells 3 partitioned by the partition walls 25. The cell 3 is partly opened to two ends 23 and 24 of the ceramic substrate 22. That is, parts of the cells 3 are opened to two ends 23 and 24 of the ceramic substrate 22, while the remaining cells 3 are closed with stoppers 32 formed on the two ends 23 and 24. As shown in Figs. 15 and 16, in the present example, openings 31 for opening the ends of the cells 3 and the stoppers 32 for closing the ends of the cells 3 are alternately arranged to form a so-called checkered pattern. The carbon-based material combustion catalyst 1 (specimens E2) manufactured in Example 2 is supported on the partition walls 25 of the ceramic substrate 22. As shown in Fig. 18, the bonding layer 155 made by burning alumina sol is formed on the partition walls 25, so that the carbon-based material combustion catalyst 1 is supported in the bonding layer 155. The bonding layer 155 contains oxide ceramic particles 15 made of alumina and connected together, and the combustion catalyst 1 or catalyst particles are dispersed into the bonding layer 155.

As shown in Fig. 17, parts where the stoppers 32 are disposed and the other parts where the stoppers 32 are not disposed in the catalyst carrier 2 of the present example are alternately arranged on both ends of the cells positioned at the end 23 on the upstream side which is an inlet of an exhaust gas 10 and at the end 24 on the downstream side which is an outlet of the exhaust gas 10. A number of holes are formed in the partition wall 25 to allow the exhaust gas 10 to flow therethrough.

The catalyst carrier 2 of the present example has the entire size of 160 mm in diameter, and of 100 mm in length. The cell has the size of 3 mm in thickness and of 1.47 mm in pitch.

The ceramic substrate 22 is made of cordierite. The cell 3 for use has a rectangular section. The cell 3 for use can have various other cross-sectional shapes, including a triangular shape, a hexagonal shape, and the like.

In the present example, the opening 31 for opening the end of the cell 3 and the stopper 32 for closing the other end of the cell 3 are alternately arranged to form the so-called checkered pattern.

Next, a manufacturing method of the ceramic honeycomb structure of the present example will be described below.

First, talc, molten silica, and aluminum hydroxide were measured so as to form a desired cordierite composition, and a pore-forming agent, a binder, water, and the like were added to these materials measured, which were mixed and stirred by a mixing machine. The thus-obtained clayish ceramic material was pressed and molded by a molding machine to obtain a molded member having a honeycomb shape. After drying, the molded member was cut into a desired length, so as to manufacture a molded member including an outer peripheral wall, partition walls provided inside the wall in a honeycomb shape, and a plurality of cells partitioned by the partition walls and penetrating both ends. Then, the molded member was heated to a temperature of 1400 to 1450 °C for 2 to 10 hours to be temporarily burned so as to obtain a temporary burned member with the honeycomb structure.

Then, a masking tape was affixed to the honeycomb structure so as to cover both entire ends of the honeycomb structure. A laser light was applied in turn to parts of the masking tape corresponding to positions to be covered with the stoppers on two ends of the ceramic honeycomb structure, and the masking tape was melted, or burned and removed to form through holes. Thus, the through holes were formed at parts of the ends of the cells to be covered with the stoppers. The parts other than the ends of the cells were covered with the masking tape. In the present example, the through holes were formed in the masking tape such that the through holes and the parts covered with the masking tape were alternately disposed on both ends of the cells. In the present example, the masking tape used was a resin film having a thickness of 0.1 mm.

Next, the talc, the molten silica, the alumina, and the aluminum hydroxide, serving as main raw material for a stopper material, were measured so as to have the desired composition, and the binder, water, and the like were added to these materials measured, which were mixed and stirred by the mixing machine to manufacture the slurry stopper material. At this time, the pore-forming agent can be added if necessary. After preparing a case including the slurry stopper material, the end surface of the honeycomb structure partly having the through holes formed therein was immersed into the slurry material. Thus, the stopper material was inserted in an appropriate amount from the through holes of the masking tape into the ends of the cells. The other end of the honeycomb structure was subjected to the same process. In the above described manner, the honeycomb structure was obtained in which the stopper material was disposed in the openings of the cells to be closed.

Then, the honeycomb structure and the stopper material disposed in the positions to be closed were simultaneously burned at about 1400 to 1450 °C. Thus, the masking tape was burned and removed thereby to manufacture a ceramic honeycomb structure (ceramic substrate) 22 having a plurality of openings 31 for opening the ends of the cells, and a plurality of stoppers 32 for closing the ends of the cells 3 formed at both ends of the cells 3 as shown in Fig. 15.

Then, the carbon-based material combustion catalyst (specimen E2) manufactured in Example 2 was mixed with alumina slurry containing 3 wt% of alumina sol. Further, water was added to the mixture to adjust the mixture to a desired viscosity, thereby providing a slurry composite material. Then, the partition walls 25 of the ceramic substrate 22 were coated with the composite material. Thereafter, the ceramic substrate was burned by being heated at a temperature of 500 °C. The amount of coating of the slurry composite material was 60 g per L of the substrate having honeycomb structure. In this way, as shown in Figs. 15, 16, and 18, the catalyst carrier 2 supporting the carbon-based material combustion catalyst 1 on the ceramic substrate 22 was obtained.

The catalyst carrier 2 of the present example supports the carbon-based material combustion catalyst 1 (specimen E2) of Example 2 on the cell wall 22. Thus, the honeycomb structure 2 can cause the carbon-based material to be burned at a low temperature without rotting the substrate using the excellent property of the carbon-based material combustion catalyst 1. Furthermore, water hardly reduces the catalytic activity for the carbon-based material.

The carbon-based material combustion catalyst (specimen E2) is formed by burning the mixture of the sodalite and the alkali metal source (potassium carbonate). Such a carbon-based material combustion catalyst relatively strongly holds an alkali metal element (K) therein, which hardly causes the elution of the alkali metal. Thus, when the carbon-based material combustion catalyst is supported on the honeycomb structure, the elution of the alkali metal and further the corrosion of the ceramic substrate can be prevented.

Although in the present example, the catalyst carrier is manufactured using the ceramic substrate (e.g., ceramic honeycomb structure) made of cordierite, porous ceramics with high heat resistance made of, for example, SiC, aluminum titanate, or the like can also be used as the ceramic substrate to manufacture the same catalyst carrier. Although in the present example, the ceramic honeycomb structure with the end of the cell closed by the stopper is used as the above-mentioned ceramic substrate, for example, a ceramic honeycomb structure without stoppers can be used in order to reduce a loss in pressure.

In forming of the catalyst carrier adapted for supporting the carbon-based material combustion catalyst and containing not only composite oxide particles, but also a rare-earth element, when the carbon-based material combustion catalyst (specimen E2) is mixed with the alumina slurry containing 3 wt% of alumina sol, oxide particles consisting of, for example, CeO₂, ZrO₂ CeO₂-ZrO₂ solid solution, or the like can be further added to manufacture the catalyst carrier.

In forming of the catalyst carrier for supporting noble metal in addition to the carbon-based material combustion catalyst, when the carbon-based material combustion catalyst (specimen E2) is mixed with the alumina slurry containing 3 wt% of alumina sol, for example, a platinum nitrate solution can be further dispersed by a predetermined amount to manufacture the carrier.

In the present example, the catalyst carrier was manufactured by supporting the carbon-based combustion catalyst (specimen E2) manufactured in Example 2 on the ceramic substrate. Alternatively, the same process as that in the present example can be performed using the carbon-based material combustion catalyst (for example, the specimen E1) manufactured in Example 1 instead of Example 2 thereby to manufacture a catalyst carrier for supporting the combustion catalyst manufactured in Example 1 on the ceramic substrate.

### (Comparative Example)

In the comparative example, a catalyst carrier for supporting the mixture of sodalite not burned and an alkali metal source (potassium carbonate) on a ceramic substrate was manufactured as a comparative example with respect to the catalyst carrier of Example 3.

The catalyst carrier manufactured in the comparative example was the same as that in Example 3 except for the type of supported catalyst.

In manufacturing the catalyst carrier of the comparative example, first, a ceramic substrate with the ceramic honeycomb structure, made of the same kind of cordierite as that in Example 3, was prepared.

Then, 100 parts by weight of sodalite and 5 parts by weight of potassium carbonate were mixed with water. The liquid mixture was heated to evaporate water, thereby obtaining a solid mixture. In this way, the mixture of the sodalite and the potassium carbonate was obtained.

Then, the mixture was mixed with the alumina slurry containing 3 wt% of alumina sol, and water was added thereto to adjust the mixture to a desired viscosity, thereby obtaining the slurry composite material. Then, like Example 3, the partition walls of the ceramic substrate were coated with the slurry composite material, and heated at a temperature of 500 °C, so that the mixture was burned on the ceramic substrate. In this way, the catalyst carrier serving as a comparative example was obtained.

When the catalyst carrier obtained in the comparative example was observed, cracks occurred in a part of the ceramic substrate. That is, when the mixture of the sodalite not burned and the alkali metal source (e.g., potassium carbonate) is supported on the ceramic substrate, the alkali metal (potassium) is easily eluted from the mixture in heating, for example, in burning or the like. The eluted alkali metal attacks the cordierite component of the ceramic substrate to break a crystal system. Thus, the thermal expansion coefficient and strength of the ceramic substrate partly changes to easily cause cracks or the like in the ceramic substrate as mentioned above.

### BRIEF DESCRIPTION OF DRAWINGS

Fig. 1 is an explanatory diagram showing DTA exothermic peak temperatures when carbon-based material is burned using respective catalyst species or without using any catalyst in Example 1;
Fig. 2 is an explanatory diagram showing a relationship between the burning temperature and the DTA exothermic peak temperature of the carbon-based material combustion catalyst before and after water washing in Example 1;
Fig. 3 is an explanatory diagram showing a relationship between zeolite species and the DTA exothermic peak temperatures of the catalysts in Example 1;
Fig. 4 is an explanatory diagram showing DTA exothermic peak temperatures when carbon-based material is burned using respective catalyst species or without using any catalyst in Example 2;
Fig. 5 is a diagram showing a relationship among the temperature, TG, and DTA when carbon black is singly burned without using the catalyst in Example 2;
Fig. 6 is a diagram showing a relationship among the temperature, TG, and DTA when the carbon black is burned using a noble metal-based catalyst as the catalyst species in Example 2;
Fig. 7 is a diagram showing a relationship among the temperature, TG, and DTA when the carbon black is burned using potassium carbonate as the catalyst species in Example 2;
Fig. 8 is a diagram showing a relationship among the temperature, TG, and DTA when the carbon black is burned using a carbon-based material combustion catalyst (specimen E1) as the catalyst species in Example 2;
Fig. 9 is an explanatory diagram showing a relationship between the burning temperature, and DTA exothermic peak temperatures of the carbon-based material combustion catalyst before and after the water washing in Example 2;
Fig. 10 is an explanatory diagram showing a relationship between potassium salt species and the DTA exothermic peak temperatures of the carbon-based material combustion catalyst before and after the water washing in Example 2;
Fig. 11 is an explanatory diagram showing a relationship between alkali metal species, alkaline earth metal species, and the DTA exothermic peak temperatures of the carbon-based material combustion catalyst before and after the water washing in Example 2;
Fig. 12 is an explanatory diagram showing a relationship between alkali metal species other than potassium, alkaline earth metal species, and the DTA exothermic peak temperatures of the carbon-based material combustion catalyst before and after the water washing in Example 2;
Fig. 13 is an explanatory diagram showing a relationship between the amount of potassium mixed in the mixing step and the DTA exothermic peak temperatures of the carbon-based material combustion catalyst before and after the water washing in Example 2;
Fig. 14 is an explanatory diagram showing a relationship between the amount of barium mixed in the mixing step and the DTA exothermic peak temperatures of the carbon-based material combustion catalyst before and after the water washing in Example 2;
Fig. 15 is a perspective view of a catalyst carrier with ceramic honeycomb structure in Example 3;
Fig. 16 is a sectional view of the catalyst carrier with ceramic honeycomb structure in the longitudinal direction in Example 3;
Fig. 17 is a sectional view showing the catalyst carrier with ceramic honeycomb structure in a state where the exhaust gas passes through the catalyst carrier in Example 3;
Fig. 18 is a sectional view showing the structure of the catalyst carrier including the carbon-based material combustion catalyst dispersed into a bonding layer including oxide ceramic particles connected together;
Fig. 19 is a sectional view showing the structure of a catalyst carrier including the carbon-based material combustion catalyst and a rare-earth element dispersed into a bonding layer including oxide ceramic particles connected together;
Fig. 20 is a sectional view showing the structure of a catalyst carrier for supporting the carbon-based material combustion catalyst, a rare-earth element, and noble metal dispersed into a bonding layer including oxide ceramic particles connected together;
Fig. 21 is an explanatory diagram showing a state of noble metal supported on an oxide particle;
Fig. 22 is an explanatory diagram showing a state of noble metal supported on a rare-earth element such as oxide particle of the rare-earth element;
Fig. 23 is a sectional view showing the structure of a catalyst carrier having a noble metal layer formed on the bonding layer containing the carbon-based material combustion catalyst formed over the substrate;
Fig. 24 is a sectional view showing the structure of a catalyst carrier having a noble metal layer formed between the substrate and the bonding layer containing the carbon-based material combustion catalyst;
Fig. 25 is a diagram showing the kinds of zeolites and the ratio of SiO₂/Al₂O₃ of each zeolite composition;
Fig. 26 is a diagram showing the results of DTA exothermic peak temperatures before and after the water washing of the carbon-based material combustion catalysts manufactured using potassium carbonate; and
Fig. 27 is a diagram showing the results of DTA exothermic peak temperatures before and after the water washing of the carbon-based material combustion catalysts manufactured using barium carbonate.

## Claims

1. A method of manufacturing a carbon-based material combustion catalyst, the combustion catalyst being adapted for burning a carbon-based material contained in an exhaust gas from an internal combustion engine, while being supported on a ceramic substrate, the method comprising the steps of:
mixing an aluminosilicate having an atomic equivalent ratio of Si/Al ≥ 1, and an alkali metal source and/or an alkaline earth metal source in water;
drying a liquid mixture by heating a mixture after the mixing step and evaporating water thereby to obtain a solid; and
burning the solid at a temperature of 600 °C or more thereby to obtain the carbon-based material combustion catalyst,
wherein the aluminosilicate is sodalite.

2. The method of manufacturing a carbon-based material combustion catalyst according to claim 1, wherein the alkali metal source includes one or more elements selected from the group consisting of Na, K, Rb, and Cs, and the alkaline earth metal source includes one or more elements selected from the group consisting of Ca, Sr, and Ba.

3. The method of manufacturing a carbon-based material combustion catalyst according to claim 1 or 2, wherein each of the alkali metal source and/or the alkaline earth metal source is a carbonate, a sulfate, a phosphate, a nitrate, an organic acid salt, a halide, an oxide, or a hydroxide.

4. The method of manufacturing a carbon-based material combustion catalyst according to any one of claims 1 to 3, further comprising the step of pulverizing the carbon-based material combustion catalyst after the burning step.

5. The method of manufacturing a carbon-based material combustion catalyst according to any one of claims 1 to 4, wherein in the mixing step, a polar solvent other than water is used instead of water, and the aluminosilicate and the alkali metal source and/or the alkaline earth metal source are mixed in the polar solvent, and
wherein in the drying step, the polar solvent is evaporated to obtain the solid.

6. The method of manufacturing a carbon-based material combustion catalyst according to any one of claims 1 to 5, wherein the aluminosilicate and the alkali metal source and/or the alkaline earth metal source are mixed such that the total amount of the alkali metal element and the alkaline earth metal element contained in the alkali metal source and/or the alkaline earth metal source is equal to or less than 2.25 mol with respect to 1 mol of the Si element of the aluminosilicate.

7. The method of manufacturing a carbon-based material combustion catalyst according to claim 6, wherein in the mixing step, the aluminosilicate and the alkali metal source and/or the alkaline earth metal source are mixed such that the total amount of the alkali metal element and the alkaline earth metal element contained in the alkali metal source and/or the alkaline earth metal source is equal to or less than 1 mol with respect to 1 mol of the Si element of the aluminosilicate.

8. The method of manufacturing a carbon-based material combustion catalyst according to claim 7, wherein in the mixing step, the aluminosilicate and the alkali metal source and/or the alkaline earth metal source are mixed such that the total amount of the alkali metal element and the alkaline earth metal element contained in the alkali metal source and/or the alkaline earth metal source is equal to or less than 0.5 mol with respect to 1 mol of the Si element of the aluminosilicate.

9. The method of manufacturing a carbon-based material combustion catalyst according to any one of claims 1 to 8, wherein in the burning step, the solid is burned at a temperature in a range between 700 °C to 1200 °C.

10. A carbon-based material combustion catalyst being produced by the manufacturing method according to any one of claims 1 to 9.

11. A method of manufacturing a catalyst carrier for supporting a carbon-based material combustion catalyst on a ceramic substrate, the combustion catalyst being adapted for burning carbon-based material contained in an exhaust gas from an internal combustion engine, the method comprising the step of supporting the combustion catalyst made by the manufacturing method according to any one of claims 1 to 9 on the ceramic substrate thereby to obtain the catalyst carrier.

12. The method of manufacturing a catalyst carrier according to claim 11, wherein in the supporting step, at least the carbon-based material combustion catalyst and sol or slurry oxide ceramic particles are mixed to form a composite material, and the ceramic substrate is coated with the composite material and then heated.

13. The method of manufacturing a catalyst carrier according to claim 12, wherein the oxide ceramic particles mainly contain one or more elements selected from the group consisting of alumina, silica, titania, and zirconia.

14. The method of manufacturing a catalyst carrier according to any one of claims 11 to 13, wherein the ceramic substrate includes cordierite, SiC, or aluminum titanate.

15. The method according to any one of claims 11 to 14, wherein the ceramic substrate has a honeycomb structure.

16. A catalyst carrier being obtained by the manufacturing method according to any one of claims 11 to 15.

17. A method of manufacturing a carbon-based material combustion catalyst, the combustion catalyst being adapted for burning carbon-based material contained in an exhaust gas from an internal combustion engine while being supported on a ceramic substrate, the method comprising the step of burning sodalite at a temperature of 600 °C or more thereby to obtain the carbon-based material combustion catalyst.

18. The method of manufacturing a carbon-based material combustion catalyst according to claim 17, wherein in the burning step, the sodalite is burned at a temperature in a range between 700 °C to 1200 °C.

19. The method of manufacturing a carbon-based material combustion catalyst according to claim 17 or 18, further comprising the step of pulverizing the carbon-based material combustion catalyst obtained after the burning step.

20. A carbon-based material combustion catalyst being produced by the manufacturing method according to any one of claims 17 to 19.

21. A method of manufacturing a catalyst carrier for supporting a carbon-based material combustion catalyst on a ceramic substrate, the combustion catalyst being adapted for burning carbon-based material contained in an exhaust gas from an internal combustion engine, the method comprising the step of supporting the combustion catalyst made by the manufacturing method according to any one of claims 17 to 19 on the ceramic substrate thereby to obtain the catalyst carrier.

22. The method of manufacturing a catalyst carrier according to claim 21, wherein in the supporting step, at least the carbon-based material combustion catalyst and sol or slurry oxide ceramic particles are mixed to form a composite material, and the ceramic substrate is coated with the composite material and then heated.

23. The method of manufacturing a catalyst carrier according to claim 22, wherein the oxide ceramic particles mainly contain one or more elements selected from the group consisting of alumina, silica, titania, and zirconia.

24. The method of manufacturing a catalyst carrier according to any one of claims 21 to 23, wherein the ceramic substrate includes cordierite, SiC, or aluminum titanate.

25. The method of manufacturing a catalyst carrier according to any one of claims 21 to 24, wherein the ceramic substrate has a honeycomb structure.

26. A catalyst carrier obtained by the manufacturing method according to any one of claims 21 to 25.
